(19) Europäisches Patentamt / European Patent Office / Office européen des brevets

(11) EP 2 821 437 B1

(12) **EUROPEAN PATENT SPECIFICATION**

(45) Date of publication and mention of the grant of the patent:
**17.08.2022 Bulletin 2022/33**

(21) Application number: **13754778.2**

(22) Date of filing: **28.02.2013**

(51) International Patent Classification (IPC):
***C08L 63/00*** *(2006.01)* ***C08G 59/62*** *(2006.01)*
***C08K 3/00*** *(2018.01)* ***H02K 1/18*** *(2006.01)*
***H02K 15/03*** *(2006.01)* ***C08K 3/36*** *(2006.01)*
***H02K 1/276*** *(2022.01)* ***C08G 59/32*** *(2006.01)*
***C08G 59/68*** *(2006.01)* *H02K 1/04 (2006.01)*
*H02K 1/28 (2006.01)*

(52) Cooperative Patent Classification (CPC):
(C-Sets available)
**H02K 15/03; C08G 59/3218; C08G 59/621; C08G 59/688; C08K 3/36;** H02K 1/2766 (Cont.)

(86) International application number:
**PCT/JP2013/055487**

(87) International publication number:
**WO 2013/129598 (06.09.2013 Gazette 2013/36)**

(54) **RESIN COMPOSITION FOR ROTOR FIXING, ROTOR, AND AUTOMOTIVE VEHICLE**

HARZZUSAMMENSETZUNG ZUR ROTORBEFESTIGUNG, ROTOR UND KRAFTFAHRZEUG

COMPOSITION DE RÉSINE POUR FIXATION DE ROTOR, ROTOR ET VÉHICULE AUTOMOBILE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **01.03.2012 JP 2012045885**

(43) Date of publication of application:
**07.01.2015 Bulletin 2015/02**

(73) Proprietor: **Sumitomo Bakelite Company Limited**
**Shinagawa-ku**
**Tokyo 140-0002 (JP)**

(72) Inventors:
- **KITADA Tetsuya**
  **Tokyo 140-0002 (JP)**
- **MUTO Kohji**
  **Tokyo 140-0002 (JP)**

(74) Representative: **Müller-Boré & Partner Patentanwälte PartG mbB**
**Friedenheimer Brücke 21**
**80639 München (DE)**

(56) References cited:
**EP-A2- 0 350 232** **WO-A1-2004/092263**
**WO-A1-2005/007373** **WO-A1-2008/007679**
**WO-A1-2010/031445** **WO-A1-2010/127907**
**JP-A- 2003 137 528** **JP-A- 2003 199 303**
**JP-A- 2006 304 547** **JP-A- 2007 068 270**
**JP-A- 2008 111 062** **JP-A- 2008 279 656**
**JP-A- 2009 013 213** **JP-A- 2010 159 400**
**US-A1- 2011 241 188**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 821 437 B1

(52) Cooperative Patent Classification (CPC): (Cont.)

C-Sets
**C08K 3/36, C08L 63/00**

## Description

The present invention relates to a rotor-fixing resin composition, a rotor and an automobile.
Priority is claimed on Japanese Patent Application No. 2012-045885, filed March 1, 2012.

[Background Art]

Regarding a motor mounted on an automobile, etc., the techniques to improve the strength thereof has been studied. The technique described in Patent Literature 1 relates to a motor-sealing resin molding material which is used for sealing a motor. In other words, it can be considered that the molding material described in Patent Literature 1 is used for a housing which seals a motor.
Patent Literatures 2-6 describe the techniques relating to a rotor constitutes a motor. A rotor includes a rotor core having a hole portion and a permanent magnet inserted into the hole portion.
For example, Patent Literature 2 describes the technique of filling a slit, which is provided so as to be communicated with a housing hole for housing a permanent magnet, with a resin. Also, Patent Literature 2 describes that this slit is formed at the both end portions in a circumferential direction of a housing hole for housing a permanent magnet in order to increase a magnetic flux amount passing through a stator.
Also, Patent Literatures 3-5 describe the techniques of making a magnet adhere to a rotor core.
Patent Literature 3 describes the technique of making a permanent magnet adhere to a rotor core using an adhesive agent coated directly on a permanent magnet.
Patent Literature 4 describes the technique of inserting a permanent magnet into a slot of a rotor core in which an adhesive agent was previously put, and thermally curing an adhesive agent in the condition after turning a rotor upside down.
Patent Literature 5 describes the technique of engaging a cured adhesive agent to a concave part and a convex part formed on the surface of a magnet or the inner surface of a slot for inserting a magnet and an adhesive agent.
Moreover, Patent Literature 6 describes the technique of fixing a magnet to a rotor core using a resin portion injected to a hole portion for inserting a magnet. In specific, Patent Literature 6 describes the technique in which a filling portion, which is formed between a hole portion and a magnet embedded in a hole portion, is formed by injecting a resin portion to a hole portion from the portion which faces a central portion in a width direction of a magnet in the opening of a hole portion.
Patent Literature 7 describes the technique relating to a resin. In specific, Patent Literature 7 relates to a granular semiconductor-sealing epoxy resin composition and the control of the grain size distribution thereof.
Patent Literature 8 discloses an apparatus for manufacturing an Interior Permanent Magnet rotor having a magnet embedded in each of a plurality of slots formed in a core body, including an inlet for injecting a filler to a gap between an inner wall of said slot and said magnet, wherein a plurality of said inlets are provided for one said slot.
Patent Literature 9 discloses a penetrable epoxy resin composition having a specific viscosity which comprises a liquid, epoxy resin mixture containing a glycidyl ether of bisphenol having an epoxy equivalent of 158-270 and a flexible epoxy resin; a curing agent capable of reacting with said epoxy resin mixture when heated to a curing temperature; an inert organic solvent which does not react with said epoxy resin mixture, which is capable of dissolving said curing agent and which has a boiling point lower than said curing temperature; and an inorganic filler having an average particle size of 0.1-5 μm.
Patent Literature 10 discloses a curable epoxy resin composition, which is suitable for the production of electrical insulation systems for low, medium and high voltage applications, comprising at least an epoxy resin, a hardener, a mineral filler material, and optionally further additives.
Patent Literature 11 discloses a curable system comprising at least two compositions (A) and (B) wherein composition (A) comprises at least one epoxy resin, at least one inorganic thixotropic agent selected from the group consisting of fumed metal oxides, fumed semi-metal oxides and layered silicates, at least one organic gelling agent and at least 10 wt.-% of one or more filler, and wherein composition (B) comprises at least one hardener for epoxy resins, at least one inorganic thixotropic agent selected from the group consisting of fumed metal oxides, fumed semi-metal oxides and layered silicates, at least one organic thixotropic agent selected from carbamates and at least 10 wt.-% of one or more filler.
Patent Literature 12 discloses a production method for a spherical silica powder which is improved in the adhesiveness to a resin by increasing the silanol group amount on a powder surface while maintaining high fillability and high fluidity.
[Patent Literature 1] Japanese Unexamined Patent Application, First Publication No. 2009-13213
[Patent Literature 2] Japanese Unexamined Patent Application, First Publication No. 2002-359942

[Patent Literature 3] Japanese Unexamined Patent Application, First Publication No. 2003-199303
[Patent Literature 4] Japanese Unexamined Patent Application, First Publication No. 2005-304247
[Patent Literature 5] Japanese Unexamined Patent Application, First Publication No. Hei 11-98735
[Patent Literature 6] Japanese Unexamined Patent Application, First Publication No. 2007-236020
[Patent Literature 7] Japanese Unexamined Patent Application, First Publication No. 2010-159400 and US 2011/241188 A1
[Patent Literature 8] WO 2008/007679 A1
[Patent Literature 9] EP 0 350 232 A2
[Patent Literature 10] WO 2010/031445 A1
[Patent Literature 11] WO 2010/127907 A1
[Patent Literature 12] JP 2003 137528 A

[Summary of Invention]

[Technical Problem]

A rotor core is used under high-speed rotation at a high temperature for a long time. Currently, it is desired to further downsize a motor for driving an automobile, and a motor capable of more high-speed rotation is required for the downsizing. Thus, the improvement in durability during high-speed rotation is strongly desired for a rotor core.

When a motor is under high-speed rotation, a large centrifugal force acts on a permanent magnet embedded inside of a rotor core. It is desired to obtain the structure which does not cause the misalignment and deformation of a magnet even though a centrifugal force acts on a magnet. In order to achieve this kind of structure, the optimal design of a fixing member for fixing a magnet to a rotor core is an important technical problem.

Therefore, an object of the present invention is to provide a rotor-fixing resin composition to obtain a rotor core with enough durability to endure a repeated use, and a rotor formed by using this rotor-fixing resin composition.

[Solution to Problem]

The present inventors have considered the improvements of the elastic modulus and strength, etc. of a fixing member in order to suppress the misalignment and deformation of a magnet even though a centrifugal force acts on a magnet, and have studied the use of an inorganic filler-containing fixing resin composition for a fixing member.

However, the misalignment and deformation of a magnet could not be sufficiently suppressed only by improving the elastic modulus and strength, etc. of a fixing member using the aforementioned structures.

The present inventors have intensively conducted the studies regarding the design guide which realizes the aforementioned structure. In the result, they have found that the criteria of the tensile elongation at break of the fixing member at a given temperature, which they invented, is useful for the design guide, and the present invention was completed.

The present invention provides a rotor-fixing resin composition as defined in the appended claims.

In addition, present invention provides a rotor including:

a rotor core fixed and installed on a rotating shaft in which a plurality of hole portions are provided along the peripheral portion of the rotating shaft;
a magnet inserted in the hole portions; and
a fixing member provided in a separation portion between the hole portion and the magnet, wherein
the fixing member is formed using the aforementioned rotor-fixing resin composition.

In addition, present invention provides an automobile which is manufactured using the aforementioned rotor.

[Advantageous Effects of Invention]

According to the present invention, the tensile elongation at break at a given temperature is used as the criteria for measuring the durability of the rotor core. By using the fixing member in which the tensile elongation at break-a is 0.1% or higher and 1.7% or lower at a temperature of 120°C, it is possible to achieve a rotor core exhibiting sufficient durability under an environment of high-speed rotation at a high temperature for a long time.

The aforementioned objects and other objects, features, and advantages become more apparent with reference to suitable embodiments as described below and the accompanying drawings below.

Fig. 1 is a planar view showing the rotor according to the present embodiment.
Fig. 2 is a cross-sectional view showing the rotor illustrated in Fig. 1.
Fig. 3 is a cross-sectional enlarged view showing the rotor illustrated in Fig. 1.
Fig. 4 is a planar view showing the first modified example of the rotor core constitutes the rotor illustrated in Fig. 1.
Fig. 5 is a planar view showing the second modified example of the rotor core constitutes the rotor illustrated in Fig. 1.
Fig. 6 is a planar view showing the third modified example of the rotor core constitutes the rotor illustrated in Fig. 1.
Fig. 7 is a planar enlarged view showing a part of the rotor illustrated in Fig. 1.
Fig. 8 is a cross-sectional view showing the rotor illustrated in Fig. 1.
Fig. 9 is a planar enlarged view showing a part of the rotor illustrated in Fig. 1.
Fig. 10 is a cross-sectional view of the upper mold of the insert molding device used in insert molding.

[Description of Embodiments]

Hereinafter, an embodiment of the present invention will be described with reference to the drawings. In all the drawings, the same reference signs are attached to the same components, and an explanation thereof is not be repeated as appropriate.

Fig. 1 is a planar view showing the rotor 100 according to the present embodiment. Fig. 2 is a cross-sectional view showing the rotor 100 illustrated in Fig. 1. Fig. 1 and Fig. 2 are the schematic diagrams illustrating the rotor 100, the configuration of the rotor 100 according to the present embodiment is not limited to the ones illustrated in Fig. 1 and Fig. 2.

The rotor 100 includes the rotor core 110, the magnet 120 and the fixing member 130. In the rotor core 110, the hole portion 150 is formed. The magnet 120 is inserted into the hole portion 150. The fixing member 130 is provided in the separation portion 140 between the hole portion 150 and the magnet 120.

The fixing member 130 is formed by using the fixing resin composition. The rotor-fixing resin composition according to the present embodiment includes the thermosetting resin (A), the curing agent (B), the inorganic filler (C), and the silane coupling agent.

In the present embodiment, the rotor-fixing resin composition is cured by heating at 175°C for 4 hours, and the cured product is molded to a dumbbell shape pursuant to JIS K7162. The results obtained by using this molded cured product as a test piece will be described as the example. The same shape as the dumbbell shape described in JIS K7162 is described in ISO527-2.

Hereinafter, the tensile elongation at break of a test piece, which is obtained when a tensile test is carried out under the conditions of a temperature of 120°C, a test load of 20 MPa and 100 hours, is referred to as tensile elongation at break-a. Also, the tensile elongation at break of a test piece, which is obtained when a tensile test is carried out under the conditions of a temperature of 25°C, a test load of 20 MPa and 100 hours, is referred to as tensile elongation at break-b.

The tensile elongation at break is the value which can be obtained by the following equation wherein $X_0$ mm represents the whole length of the cured product molded into a dumbbell shape using the rotor-fixing resin composition before a tensile test, and $X_1$ mm represents the whole length thereof after a tensile test.

$$\text{Tensile elongation at break} = \{(X_1\ \text{mm} - X_0\ \text{mm}) / X_0\ \text{mm}\} \times 100$$

The smaller this tensile elongation at break is, the more excellent in deformation resistance and positional stability the obtained rotor core has even when a load is put thereon.

The tensile elongation at break-a at 120°C of the rotor-fixing resin composition according to the present embodiment is 0.1% or higher and 1.7% or lower. By using the rotor-fixing resin composition having the tensile elongation at break-a within the aforementioned range, it is possible to produce a rotor core excellent in durability in terms of positional stability. Also, the tensile elongation at break-a at 120°C is preferably 1.3% or lower, more preferably 1.2% or lower, and much more preferably 1.0% or lower. When the tensile elongation at break-a at 120°C is within the aforementioned range, it is possible to achieve a rotor core exhibiting sufficient durability under an environment of high-speed rotation at a high temperature for a long time.

The tensile elongation at break-b at 25°C is preferably 0.1% or higher and 0.5% or lower. When the tensile elongation at break-b at 25°C, which is measured at the lower temperature than the tensile elongation at break-a at 120°C, is within the aforementioned range, it is possible to obtain a rotor core excellent in durability having good resistance to temperature variation and positional stability. Also, the tensile elongation at break-b at 25°C is more preferably 0.4% or lower, and much more preferably 0.35% or lower. When the tensile elongation at break-b is within the aforementioned range, durability during high-speed rotation is further improved.

In order to improve the tensile elongation at break-a 120°C and the tensile elongation at break-b at 25°C, the following methods are effective.

Firstly, it is necessary to optimize the combination of an epoxy resin and a curing agent therefor to thereby improve the creep property of the resin component. In addition to this optimization, it is effective to modify the surface of the inorganic filler using the silane coupling agent to thereby improve the interfacial adhesion strength between the resin and the inorganic filler. Also, it is effective to improve the stress transferring efficiency between the resin and the inorganic filler in order to improve the creep property of the resin itself. Moreover, it is also effective to adjust the particle diameter distribution of the inorganic filler to thereby achieve the structure in which the microcrack generated inside of a resin-cured product hardly develops.

In order to calculate elastic modulus, a curve (stress-strain curve), which is graphed from the relationship between the vertical stress and the vertical strain, is made when the tensile test is carried out. Elastic modulus can be obtained from the slope of a straight line in a linear region immediately after beginning of the tensile test in the stress-strain curve. This elastic modulus is one of the barometers that indicate the possibility of the deformation of a rotor core. The larger elastic modulus is, more hardly an obtained rotor core is deformed and more excellent the durability is.

In the present embodiment, the elastic modulus-a of the cured product at 120°C is $0.8\times10^4$ MPa or higher. Also, the elastic modulus-b of the cured product at 25°C is $1.4\times10^4$ MPa or higher. When these elastic moduluses are within these ranges, durability during high-speed rotation is further improved.

Herein, elastic modulus can be appropriately adjusted by the amount of the inorganic filler or the selection of the resin component.

As described above, the cured product of the rotor-fixing resin composition according to the present embodiment has the specific tensile elongation at break-a. Thus, it is possible to obtain a rotor core excellent in durability in terms of positional stability. Also, in the cured product of the rotor-fixing resin composition according to the present embodiment, the elastic modulus is set to the specific value. By doing so, it is possible to obtain a rotor core having good balance between deformation resistance and temperature-dependent mechanical strength in addition to positional stability.

Also, in the rotor core according to the present embodiment, the rotor-fixing resin composition may be produced without using wax. Usually, it is indispensable that wax be added in a semiconductor-sealing material in order to prevent a mold from being polluted. Meanwhile, in the rotor-fixing resin composition according to the present embodiment, wax is not included on purpose.

It was found that transfer molding could be carried out without polluting a mold by refining the rotor-fixing resin composition to include a specific composition. Also, it was found that the tensile elongation at break was lowered compared with the state of the prior art. This reason is not sufficiently clear, but it can be considered that this is due to the improvement in the interfacial strength between the inorganic filler and the resin.

In order to obtain the rotor-fixing resin composition according to the present embodiment, for example, it is important to appropriately adjust the respective 3 conditions as described below.

(1) The property of the inorganic filler
(2) The condition of the silane coupling treatment for the inorganic filler
(3) The combination of the thermosetting resin, the curing agent therefor and additives

The details will be described in Examples.

However, the production method of the rotor-fixing resin composition according to the present embodiment is not limited to the aforementioned production method, and the rotor-fixing resin composition according to the present embodiment can be obtained by appropriately adjusting the respective conditions.

The rotor-fixing resin composition according to the present embodiment can be used in the aspect described below.

The rotor 100 according to the present embodiment constitutes a motor mounted on an automobile, etc., for example. A motor includes the rotor 100 and a stator provided around the rotor 100 (not illustrated). A stator is comprised of a stator core and a coil wounded around a stator core.

As shown in Fig. 2, the rotor 100 is attached to the rotating shaft 170. The rotation generated by the rotor 100 is transferred to the outside through the rotating shaft 170.

In the rotor core 110, the through hole for inserting the rotating shaft 170 is provided. The rotor core 110 is fixed to the rotating shaft 170 inserted in the through hole. The shape of the rotor core 110 is not particularly limited, but may be, for example, circular or polygonal, etc. from a planar view.

As shown in Fig. 2, the rotor core 110 is obtained by laminating the plural electromagnetic steel plates 112 which are thin plate-shaped magnetic bodies. The electromagnetic steel plate 112 is formed by iron or iron alloys, etc., for example.

Also, as shown in Fig. 2, the end plate 118a and the end plate 118b are provided in the both ends in the shaft direction of the rotor core 110. In other words, the end plate 118a is provided on the top of the laminated electromagnetic steel plates 112. Also, the end plate 118b is provided below the bottom of the laminated electromagnetic steel plates 112. The end plate 118a and the end plate 118b are fixed to the rotating shaft 170 through weld and so on, for example.

Fig. 3 is a cross-sectional enlarged view showing the rotor 100 illustrated in Fig. 1. As shown in Fig. 3, the swaged portion 160 is formed in the plural electromagnetic steel plates 112. The swaged portion 160 is comprised of the protrusion formed in the electromagnetic steel plates 112. The respective electromagnetic steel plates 112 are bound to each other via the swaged portion 160.

Also, the grooves 116 is formed in the end plate 118a in order to avoid the interference of the swaged portion 160 protruded from the electromagnetic steel plates 112 and the fixing member 130 protruded onto the electromagnetic steel plates 112. The fixing member 130 protruded onto the electromagnetic steel plates 112 is the portion formed by curing the fixing resin composition which is remaining on the electromagnetic steel plates 112 when the fixing resin composition is injected to the separation portion 140.

As shown in Fig. 1, the plural hole portions 150 are formed in the rotor core 110. The plural hole portions 150 are arranged in the rotor core 110 so as to build point symmetry around the shaft center of the rotating shaft 170.

As shown in Fig. 1, in the rotor 100 of the present embodiment, for example, the plural hole portion groups comprised of two adjacent hole portions 150 are arranged along the periphery of the rotating shaft 170. Two hole portions 150 which constitute one hole portion group are arranged in a V shape from the planar view, for example. In this case, two hole portions 150 which constitutes one hole portion group are arranged such that the respective end portions which face each other are positioned to the rotating shaft 170 side, for example. Also, two hole portions 150 which constitutes one hole portion group are arranged to be separated from each other, for example.

Fig. 4 is a planar view showing the first modified example of the rotor core 110 constitutes the rotor 100 illustrated in Fig. 1. As shown in Fig. 4, the plural hole portion groups comprised of three hole portions 150 may be arranged along the periphery of the rotating shaft 170. In this case, three hole portions 150 are comprised of the hole portion 154a and the hole portion 154b, which are arranged in a V shape from the planer view, and the hole portion 156 positioned between these hole portions. The hole portion 154a, the hole portion 154b and the hole portion 156 are arranged to be separated from one another.

Fig. 5 is a planar view showing the second modified example of the rotor core 110 constitutes the rotor 100 illustrated in Fig. 1. As shown in Fig. 5, the plural hole portions 150 having a V shape from the planer view may be arranged along the periphery of the rotating shaft 170. In this case, the center portion of the hole portion 150 is positioned to the rotating shaft 170 side, and the both end portions of the hole portion 150 are positioned to the outer periphery side of the rotor core 110.

Fig. 6 is a planar view showing the third modified example of the rotor core 110 constitutes the rotor 100 illustrated in Fig. 1. As shown in Fig. 6, the plural hole portions 150 having a rectangular shape being perpendicular to the diameter direction of the rotor core 110 from the planar view may be arranged along the periphery of the rotating shaft 170.

Herein, the arrangement and layout of the hole portions 150 are not limited to the aforementioned.

Fig. 7 is a planar enlarged view showing a part of the rotor 100 illustrated in Fig. 1.

As shown in Fig. 7, the hole portion 150 has a rectangular shape from the planar view, for example. The hole portion 150 includes the side wall 151 positioned to the outer periphery side of the rotor core 110, the side wall 153 positioned to the inner periphery side of the rotor core 110, and the side wall 155 and the side wall 157 which face each other in the circumferential direction of the rotor core 110. The side wall 151 and the side wall 153 face each other in the diameter direction of the rotor core 110. In the present embodiment, in two hole portions 150 which constitute one hole portion group and are adjacent to each other, the respective side walls 155 are arranged to face each other.

Herein, the shape of the hole portion 150 is not particularly limited as long as it corresponds to the shape of the magnet 120, and may be an elliptical shape, etc., for example.

As shown in Fig. 7, the magnet 120 has a rectangular shape from the planar view, for example. The magnet 120 includes the side wall 121 facing the side wall 151, the side wall 123 facing the side wall 153, the side wall 125 facing the side wall 155 and the side wall 127 facing the side wall 157. In other words, the side wall 121 is positioned to the outer periphery side of the rotor core 110. Also, the side wall 123 is positioned to the inner periphery side of the rotor core 110. The magnet 120 is a permanent magnet such as a neodymium magnet. Herein, the shape of the magnet 120 is not limited to the aforementioned, and may be an elliptical shape, etc., for example.

The fixing portion 130 is formed by curing the fixing resin composition with which the gap (hereinafter referred to as the separation portion 140) between the hole portion 150 and the magnet 120 is filled. For this reason, the magnet 120 is fixed to the rotor core 110. In the rotor 100 according to the present embodiment, the width of the separation portion 140 is 20 $\mu$m or more and 500 $\mu$m or less, for example.

The fixing member 130 is provided in the separation portion 140 between the hole portion 150 and the magnet 120 at least in the diameter direction of the rotor core 110. In other words, the fixing member 130 is provided in either the gap between the side wall 121 and the side wall 151 or the gap between side wall 123 and the side wall 153.

Also, the fixing member 130 is provided so as to cover at least 3 sides of the magnet 120 having a rectangular shape from the planar view, for example. In other words, at least 3 sides of the side wall 121, the side wall 123, the side wall 125 and the side wall 127 are covered with the fixing member 130.

As shown in Fig. 7, the separation portions 140 are formed in the gap between the side wall 121 and the side wall 151, the gap between the side wall 123 and the side wall 153, the gap between the side wall 125 and the side wall 155, and the gap between the side wall 127 and the side wall 157, for example. In this case, the side wall 121, the side wall 123, the side wall 125 and the side wall 127 of the magnet 120 are covered with the fixing member 130.

In the present embodiment, the fixing members 130 are formed in the gap between the side wall 121 and the side wall 151, and the gap between the side wall 123 and the side wall 153. For this reason, the position of the magnet 120 is fixed in the diameter direction of the rotor core 110. Therefore, it is possible to suppress that the magnet 120 is misaligned by a centrifugal force which acts during the high-speed rotation of a motor.

Also, as shown in Fig. 2, the fixing member 130 is formed so as to cover the upper surface of the magnet 120, for example. For this reason, the position of the magnet 120 is fixed in the shaft direction of the rotor core 110. Therefore, it is possible to suppress that the position of the magnet 120 is misaligned toward the shaft direction of the rotor core 110 during the driving of a motor.

Fig. 8 is a cross-sectional view showing the rotor 100 illustrated in Fig. 1, and shows the example different from Fig. 2.

As shown in Fig. 8, the magnet 120 may be fixed such that the side wall 121 makes contact with the side wall 151, for example. In this case, the separation portions 140 are formed in the gap between the side wall 123 and the side wall 153, the gap between the side wall 125 and the side wall 155, and the gap between the side wall 127 and the side wall 157. Thus, the side wall 123, the side wall 125 and the side wall 127 of the magnet 120 are covered with the fixing member 130. Even in this case, the position of the magnet 120 can be fixed in the diameter direction of the rotor core 110.

Also, the magnet 120 may be fixed such that the side wall 123 makes contact with the side wall 153, for example. In this case, the separation portions 140 are formed in the gap between the side wall 121 and the side wall 151, the gap between the side wall 125 and the side wall 155, and the gap between the side wall 127 and the side wall 157. Thus, the side wall 121, the side wall 125 and the side wall 127 of the magnet 120 are covered with the fixing member 130. Even in this case, the position of the magnet 120 can be fixed in the diameter direction of the rotor core 110.

Fig. 9 is a planar enlarged view showing a part of the rotor 100 illustrated in Fig. 1, and shows the example different from Fig. 7. As shown in Fig. 9, in the rotor 100 according to the present embodiment, the slits 152 may be provided in the both end portions of the hole portion 150. The slits 152 are positioned at the both ends of the hole portion 150 in the circumferential direction of the rotor core 110. Also, slits 152 are provided so as to be communicated with the hole portion 150.

By providing the slits 152 at the both ends of the hole portion 150, it is possible to narrow the magnetic path of the magnetic flux generated from the magnet 120. In other words, it is possible to suppress that the magnetic flux, which is generated from the both ends of the magnet 120 toward the circumferential direction of the rotor core 110, causes a short circuit in the rotor core 110. For this reason, it is possible to reduce a short circuit in the rotor core 110, and to increase the magnetic flux amount passing through a stator.

As shown in Fig. 9, the slit-filling resin member 132 is formed in the slits 152. The slit-filling resin member 132 is formed by curing the fixing resin composition with which the insides of the separation portion 140 and the slits 152 are filled, for example. In other words, the slit-filling resin member 132 is formed by the same process as the fixing member 130. Thus, the slit-filling resin member 132 is formed as a unit with the fixing member 130.

When the slit 152 is formed, the corner portions are formed at the boundary portions between the side wall 155 and the slit 152 and the boundary portion between the side wall 157 and the slit 152. In this case, the stress acting on the magnet 120 during the driving of a motor is concentrated in the portions making contact with the aforementioned corner portions.

According to the present modified example, by forming the slit-filling resin member 132 in the slits 152, it is possible to relax the concentration of the stress acting on the magnet 120 during the driving of a motor. For this reason, it is possible to suppress that a large stress acts on the he magnet 120 during the driving of a motor. Therefore, it is possible to prevent the corruption of the magnet 120 from occurring.

(Rotor-Fixing Resin Composition)

Next, the fixing resin composition according to the present embodiment will be described in detail.

The fixing resin composition according to the present embodiment is in a powder form, a granule form or a tablet form. Thus, as described below, the fixing resin composition is charged in the separation portion 140 by the method such as the injection of the melted fixing resin composition into the separation portion 140.

The fixing resin composition according to the present embodiment includes a thermosetting resin (A), a curing agent (B), an inorganic filler (C), and a silane coupling agent.

[Thermosetting Resin (A)]

The thermosetting resin (A) includes an epoxy resin (A1). The epoxy resin (A1) is suitably used because it has excellent curability and storability and a cured product thereof has excellent heat resistance, moisture resistance and chemical resistance.

The molecular weight or structure of the epoxy resin (A1) is not particularly limited.

The epoxy resin (A1) includes novolac-based epoxy resins, namely a phenol novolac-based epoxy resin and a cresol novolac-based epoxy resin; bisphenol-based epoxy resins such as a bisphenol A-based epoxy resin and a bisphenol F-based epoxy resin; a biphenyl-based epoxy resin; a triphenylmethane-based epoxy resin; a dicyclopentadiene-based epoxy resin; a bisnaphthol-based epoxy resin; a phenolaralkyl-based epoxy resin; and a dihydroanthracenediol-based epoxy resin. These may be used singularly or in combination of 2 or more kinds thereof.

When the thermosetting resin (A) includes the epoxy resin (A1), it is preferable that the epoxy resin (A1) contain the structure in which the aromatic ring is coupled with the glycidylether structure or the glycidylamine structure in terms of heat resistance, mechanical properties and moisture resistance. Particularly preferable examples of the epoxy resin (A1) include the epoxy resin that contains the structure represented by the following general formula (II) (wherein c represents an integer of 1-20, and d represents an integer of 0-20.).

[Chemical Formula 1]

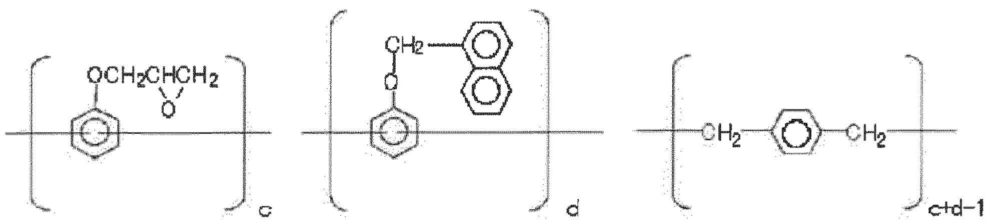

(II)

Also, examples of the phenolic resin include a resol-based phenolic resin and novolac-based phenolic resins such as a phenol novolac resin, a cresol novolac resin and a bisphenol A novolac resin.

The amount of the thermosetting resin (A) according to the present embodiment is not particularly limited, but is preferably equal to or more than 5% by mass and equal to or less than 40% by mass, and more preferably equal to or more than 10% by mass and equal to or less than 20% by mass, based on 100% by mass of the total amount of the fixing resin composition.

In a preferred embodiment that includes the epoxy resin (A1) as the thermosetting resin (A), the amount of the epoxy resin is not particularly limited, but is preferably equal to or more than 70% by mass and equal to or less than 100% by mass, and more preferably equal to or more than 80% by mass and equal to or less than 100% by mass, based on 100% by mass of the thermosetting resin (A).

[Curing Agent (B)]

The curing agent (B) is used to three-dimensionally cross-link the epoxy resin (A1) which is included in the thermosetting resin (A). The curing agent (B) includes a phenolic resin selected from the following examples. This phenolic resin-based curing agent is the full range of the monomer, oligomer and polymer which contain at least two phenolic hydroxide groups within a molecule, and the molecular weight and molecular structure thereof are not particularly limited.

Examples of the phenolic resin-based curing agent are novolac-based resins such as a phenol novolac resin, a cresol novolac resin and a naphthol novolac resin; a phenolaralkyl resin; a naphthol-based phenolic resin; and a phenolic resin formed by reacting hydroxybenzaldehyde, formaldehyde and phenol;. These may be used singularly or in combination of 2 or more kinds thereof. The use of the aforementioned phenolic resin-based curing agent realizes the good balance of flame resistance, moisture resistance, electric properties, curing properties, storage stability and the like. In particular, in term of curing properties, the equivalents of the hydroxyl groups in the phenolic resin-based curing agent can be set to, for example, equal to or more than 90 g/eq and equal to or less than 250 g/eq.

Further, examples of other curing agents that can be additionally used include a polyaddition-based curing agent, a catalyst-based curing agent and a condensation-based curing agent.

Examples of the polyaddition-based curing agent include polyamine compounds that include aliphatic polyamines such as diethylenetriamine (DETA), triethylenetetramine (TETA) and methaxylenediamine (MXDA), aromatic polyamines such as diaminodiphenylmethane (DDM), m-phenylenediamine (MPDA) and diaminodiphenylsulfone (DDS),

and also dicyandiamide (DICY) and organic acid dihydrazide; acid anhydrides that include alicyclic acid anhydrides such as hexahydrophthalic anhydride (HHPA) and methyltetrahydrophthalic anhydride (MTHPA), and aromatic acid anhydrides such as trimellitic anhydride (TMA), pyromellitic anhydride (PMDA) and benzophenone tetracarboxylic acid (BTDA); polyphenol compounds such as a novolac-based phenolic resin and a phenolic polymer; polymercaptan compounds such as a polysulfide, a thioester and a thioether; isocyanate compounds such as an isocyanate prepolymer and a blocked isocyanate; and organic acids such as a carboxylic acid-containing polyester resin.

Examples of the catalyst-based curing agent include tertiary amine compounds such as benzyldimethylamine (BDMA) and 2,4,6-trisdimethylaminomethylphenol (DMP-30); imidazole compounds such as 2-methylimidazole and 2-ethyl-4-methylimidazole (EMI24); and a Lewis acid such as a BF3 complex.

Examples of the condensation-based curing agent include a resol resin; a urea resin such as a methylol group-containing urea resin; and a melamine resin such as a methylol group-containing melamine resin.

In the present invention, the curing agent includes at least one selected from the group consisting of a novolac-based phenolic resin, a phenolaralkyl resin, a naphthol-based phenolic resin, and a phenolic resin formed by reacting hydroxybenzaldehyde, formaldehyde and phenol.

When these other curing agents are used additionally, the amount of the phenolic resin-based curing agent is preferably equal to or more than 20% by mass, more preferably equal to or more than 30% by mass, and particularly preferably equal to or more than 50% by mass, based on the entire curing agent (B). When the blending ratio is within the above range, the good flowability can be exhibited while maintaining flame resistance. In addition, the amount of the phenolic resin-based curing agent is not particularly limited, but is preferably equal to or less than 100% by mass, based on the entire curing agent (B).

The amount of the curing agent (B) in the fixing resin composition is not particularly limited, but is preferably equal to or more than 0.8% by mass, and more preferably equal to or more than 1.5% by mass, based on 100% by mass of the total amount of the fixing resin composition. Good curing properties can be obtained by setting the blending ratio within the above range. Further, the amount of the curing agent (B) in the fixing resin composition is also not particularly limited, but is preferably equal to or less than 12% by mass, and more preferably equal to or less than 10% by mass, based on 100% by mass of the total amount of the entire fixing resin composition.

In addition, it is preferable that the phenolic resin as the curing agent (B) and the epoxy resin (A1) as the thermosetting resin (A) be mixed such that the equivalent ratio (EP)/(OH) of the number of epoxy groups (EP) in the total thermosetting resin (A) to the number of phenolic hydroxyl groups (OH) in the entire phenolic resin is equal to or more than 0.8 and equal to or less than 1.3, preferably equal to or more than 1.0 and equal to or less than 1.2, and more preferably equal to or more than 1.1 and equal to or less than 1.2. When the equivalent ratio is within the above range, sufficient curing properties can be obtained during molding of the obtained fixing resin composition. When a resin other than a phenolic resin that can react with an epoxy resin is used additionally, the equivalent ratio thereof may be adjusted appropriately.

[Inorganic Filler (C)]

As the inorganic filler (C), silica is used.

Examples of the inorganic filler (C) include fused silica such as fused crushed silica or fused spherical silica, and crystalline silica. Among these, fused spherical silica is preferable. The inorganic filler (C) may be used singularly or in combination of two or more kinds thereof.

The average particle diameter $D_{50}$ of the inorganic filler (C) is preferably equal to or more than 0.01 μm and equal to or less than 75 μm, and more preferably equal to or more than 0.05 μm and equal to or less than 50 μm. The filling properties into the separation portion 140 between the hole portion 150 and the magnet 120 is improved by setting the average particle diameter of the inorganic filler (C) within the above range. The average particle diameter $D_{50}$ is defined as a volume-conversion average particle diameter by a RODOS SR type laser diffraction measurement device (SYMPATEC HEROS&RODOS).

Moreover, in the fixing resin composition according to the present embodiment, the inorganic filler (C) can contain 2 or more kinds of spherical silica having different average particle diameters $D_{50}$. By using this type of the inorganic filler (C), it is possible to simultaneously achieve both of burr suppression and the improvement in flowability and filling properties.

The amount of the inorganic filler (C) is equal to or more than 50% by mass, preferably equal to or more than 60% by mass, even more preferably equal to or more than 65% by mass, and particularly preferably equal to or more than 75% by mass, based on 100% by mass of the total amount of the fixing resin composition. When the amount of the inorganic filler (C) is within the above range, it is possible to reduce both of an increase in the moisture absorption and a decrease in the strength which are accompanied by curing of the obtained fixing resin composition. Further, the amount of the inorganic filler (C) is equal to or less than 93% by mass, preferably equal to or less than 91% by mass, and even more preferably equal to or less than 90% by mass, based on 100% by mass of the total amount of the fixing

resin composition. When the amount of the inorganic filler (C) is within the above range, the obtained fixing resin composition has good flowability as well as good moldability. Therefore, the manufacturing stability of the rotor increases, and a rotor having the excellent balance between yield and durability is obtained.

Moreover, the results of the studies conducted by the present inventors revealed that the difference in linear expansion coefficient between the fixing member 130 and the electromagnetic steel plate 112 can be reduced by setting the amount of the inorganic filler (C) to equal to or more than 50% by mass. By using this type of fixing resin composition, it is possible to suppress the deformation of the electromagnetic steel plate 112 depending on temperature change and the deterioration of the rotation properties of the rotor 100. As a result, it is possible to achieve a rotor having excellent continuousness of the rotation properties among the durability.

When the amount of the silica is within the above range, the balance between the flowability and the thermal expansion coefficient becomes good.

Moreover, in the case where the inorganic filler (C) is used in combination with a metal hydroxide such as aluminum hydroxide or magnesium hydroxide, or an inorganic flame retardant such as zinc borate, zinc molybdate or antimony trioxide, which are described below, the total amount of the inorganic flame retardant and the inorganic filler is preferably within the aforementioned range of the amount of the inorganic filler (C).

The inorganic filler (C) may be preliminarily subjected to the surface treatment using the silane coupling agent (F) (may be referred to as the first coupling agent). By conducting the surface treatment, it is possible to suppress the aggregation of the inorganic fillers and to achieve good flowability. As a result, it is possible to improve the filling properties of the fixing resin composition into the separation portion 140.

In addition, because the surface treatment enhances the affinity of the inorganic filler (C) to the resin component, it is possible to improve the strength of the fixing member formed using the fixing resin composition.

Examples of the first coupling agent used in the surface treatment for the inorganic filler (C) include primary aminosilanes such as γ-aminopropyltriethoxysilane and γ-aminopropyltrimethoxysilane When the kind of the first coupling agent used in the surface treatment for the inorganic filler (C) is selected appropriately or the blending amount of the first coupling is adjusted appropriately, it is possible to control the flowability of the fixing resin composition, the strength of the fixing member and the like.

The coupling treatment for the inorganic filler (C) can be carried out as follows. Firstly, the inorganic fillers (C) and the silane coupling agents are mixed and stirred by a mixer. As a mixer, a ribbon blender, etc. can be used. During the mixing and stirring, the humidity in a mixer is preferably set to 50% or lower. By preparing this kind of spraying environment, it can be suppressed that moisture reattaches to the surface of silica particles. In addition, it can be suppressed that the coupling agents to be sprayed are contaminated by moisture, which results in the reaction among the coupling agents.

Next, an obtained mixture is taken out from the mixer, and is subjected to an aging treatment to thereby facilitate the coupling reaction. The aging treatment is carried out under the condition of 20±5°C for 7 days or more. By carrying out the aging treatment under this kind of condition, it is possible to uniformly couple the coupling agent to the surface of the silica particle. Then, the mixture is sieved to thereby remove the coarse particles. Through the aforementioned treatment, the inorganic filler (C) subjected to the silane coupling treatment can be obtained.

By using this kind of the surface-treated silica particles, it is possible to improve the interfacial adhesion strength between the silica particles and the resin composition. In addition, it is possible to suppress the generation of microcrack in the fixing member.

[Other Components]

The fixing resin composition according to the present embodiment may include a curing accelerator (D). The curing accelerator (D) may be any one which promotes the reaction between an epoxy group of the epoxy resin and a hydroxyl group of the phenolic resin-based curing agent (B), and a generally-used curing accelerator (D) can be used.

Specific examples of the curing accelerator (D) include phosphorous atom-containing compounds such as an organic phosphine, a tetra-substituted phosphonium compound, a phosphobetaine compound, an adduct of a phosphine compound and a quinone compound, and an adduct of a phosphonium compound and a silane compound; and nitrogen atom-containing compounds represented by amidine-based compounds such as 1,8-diazabicyclo(5,4,0)undecene-7 and imidazole, tertiary amines such as benzyldimethylamine, amidinium salts that is quaternary onium salts of the above compounds, and ammonium salts.

Among these, phosphorous atom-containing compounds are preferred from the viewpoint of curing properties, and from the viewpoint of a balance between flowability and curing properties, the more preferable curing accelerators are the latent curing accelerators such as a tetra-substituted phosphonium compound, a phosphobetaine compound, an adduct of a phosphine compound and a quinone compound, and an adduct of a phosphonium compound and a silane compound. A tetra-substituted phosphonium compound is particularly preferred from the viewpoint of flowability, and from the viewpoint of soldering resistance, particularly preferable curing accelerators are a phosphobetaine compound

and an adduct of a phosphine compound and a quinone compound, and an adduct of a phosphonium compound and a silane compound is particularly preferred from the viewpoint of latent curing properties. Also, a tetra-substituted phosphonium compound is preferred from the viewpoint of continuous moldability. Also, an organic phosphine and a nitrogen atom-containing compound can be suitably used from the viewpoint of cost.

Examples of the organic phosphine which may be used to form the fixing resin composition according to the present embodiment include primary phosphines such as ethylphosphine and phenylphosphine; secondary phosphines such as dimethylphosphine and diphenylphosphine; and tertiary phosphines such as trimethylphosphine, triethylphosphine, tributylphosphine and triphenylphosphine.

Examples of the tetra-substituted phosphonium compound which may be used for the fixing resin composition according to the present embodiment include a compound represented by the following general formula (1).

[Chemical Formula 2]

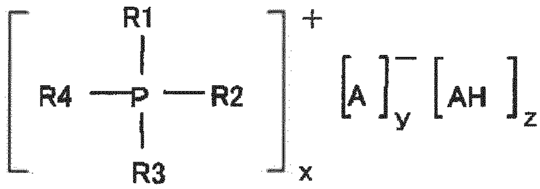

(1)

In the general formula (1), P represents a phosphorus atom; R1, R2, R3 and R4 each independently represent an aromatic group or an alkyl group; A represents an anion of an aromatic organic acid which contains, on an aromatic ring, at least one functional group selected from a hydroxyl group, a carboxyl group and a thiol group; AH represents an aromatic organic acid which contain, on an aromatic ring, at least one functional group selected from a hydroxyl group, a carboxyl group and a thiol group; x and y respectively represent an integer of 1 to 3; z represents an integer of 0 to 3; and x=y.

The compound represented by the general formula (1) is obtained, for example, in the following manner, but is not limited thereto. First, a tetra-substituted phosphonium halide, an aromatic organic acid and a base are added to an organic solvent and uniformly mixed to produce an aromatic organic acid anion in the solution system. Subsequently, water is added to the solution such that the compound represented by the general formula (1) can be precipitated.

In the compound represented by the general formula (1), R1, R2, R3 and R4 bonded to a phosphorus atom each preferably represents a phenyl group, AH preferably represents a compound having a hydroxyl group on its aromatic ring, i.e. a phenol compound, and A preferably represents an anion of the phenol compound, from the viewpoint of an excellent balance between the yield during the synthesis and the curing promoting effect. Further, the phenol compound includes, within its concept, monocyclic phenol, cresol, cathecol, resorcin, condensed polycyclic naphthol, dihydroxynaphthalene, and plural aromatic ring-containing (polycyclic) compounds such as bisphenol A, bisphenol F, bisphenol S, biphenol, phenylphenol and phenol novolac. Among these, a phenol compound having 2 hydroxyl groups are preferably used.

Examples of the phosphobetaine compound which can be used for the fixing resin composition according to the present embodiment include a compound represented by the following general formula (2).

[Chemical Formula 3]

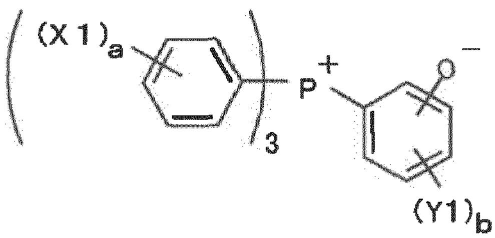

(2)

In the general formula (2), X1 represents an alkyl group having 1 to 3 carbon atoms; Y1 represents a hydroxyl group; a represents an integer of 0 to 5; and b represents an integer of 0 to 4.

The compound represented by the general formula (2) is obtained, for example, through a step in which a

triaromatic-substituted phosphine, i.e. a tertiary phosphine, is brought into contact with a diazonium salt so as to substitute a diazonium group of the diazonium salt with the triaromatic-substituted phosphine. However, the production method is not limited to this.

Examples of the adduct of a phosphine compound and a quinone compound, which can be used for the fixing resin composition according to the present embodiment, include a compound represented by the following general formula (3).

[Chemical Formula 4]

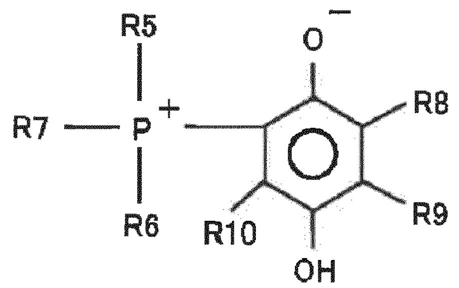

(3)

In the general formula (3), P represents a phosphorus atom; R5, R6 and R7 each independently represent an alkyl group having 1 to 12 carbon atoms or an aryl group having 6 to 12 carbon atoms; R8, R9 and R10 each independently represent a hydrogen atom or a hydrocarbon group having 1 to 12 carbon atoms; and R8 and R9 may be bonded to each other to form a ring.

Preferable examples of the phosphine compound, which is used to form the adduct of a phosphine compound and a quinone compound, include triphenylphosphine, tris(alkylphenyl)phosphine, tris(alkoxyphenyl)phosphine, trinaphthylphosphine and tris(benzyl)phosphine, each of which contains an unsubstituted aromatic ring or an aromatic ring having a substituent such as an alkyl group or an alkoxy group. Examples of the substituent include an alkyl group and an alkoxy group which have 1 to 6 carbon atoms. From the viewpoint of easy availability, triphenylphosphine is preferable.

Further, examples of the quinone compound, which is used to form the adduct of a phosphine compound and a quinone compound, include o-benzoquinone, p-benzoquinone and anthraquinones. Among these compounds, p-benzoquinone is preferable from the viewpoint of storage stability.

The adduct of a phosphine compound and a quinone compound can be obtained by bringing an organic tertiary phosphine into contact with a benzoquinone in a solvent that can dissolve both of the organic tertiary phosphine and the benzoquinone followed by mixing. The suitable examples of the solvent include ketones such as acetone and methyl ethyl ketone in which the solubility for the adduct is low. However, the solvent is not limited to these.

In the compound represented by the general formula (3), R5, R6 and R7, which are bonded to a phosphorus atom, each preferably represent a phenyl group, and R8, R9 and R10 each preferably represent a hydrogen atom. In other words, a compound produced by adding 1,4-benzoquinone to triphenylphosphine is preferred because the elastic modulus during heating of a cured product of the fixing resin composition is decreased.

Examples of the adduct of a phosphonium compound and a silane compound, which can be used to form the fixing resin composition according to the present embodiment, include a compound represented by the following general formula (4).

[Chemical Formula 5]

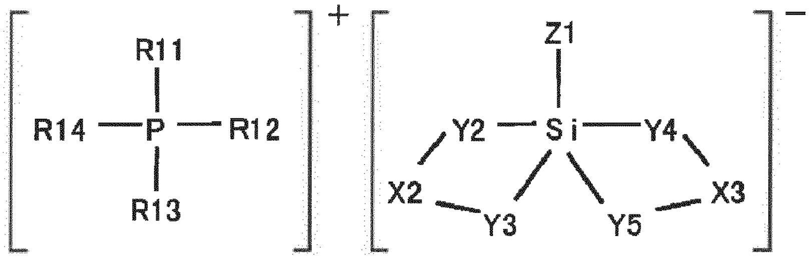

(4)

In the general formula (4), P represents a phosphorus atom; Si represents a silicon atom; R11, R12, R13 and

R14 each independently represent an organic group having an aromatic ring or a heterocyclic ring, or an aliphatic group; X2 represents an organic group which is bonded to groups Y2 and Y3; X3 represents an organic group which is bonded to groups Y4 and Y5; Y2 and Y3 each independently represent a group formed when a proton-donating group releases a proton, and the groups Y2 and Y3 in the same molecule are bonded to the silicon atom to form a chelate structure; Y4 and Y5 each independently represent a group formed when a proton-donating group releases a proton, and the groups Y4 and Y5 in the same molecule are bonded to the silicon atom to form a chelate structure; X2 and X3 may be the same as or different from each other; Y2, Y3, Y4 and Y5 may be the same as or different from each other; and Z1 represents an organic group having an aromatic ring or a heterocyclic ring, or an aliphatic group.

In the general formula (4), examples of R11, R12, R13 and R14 include a phenyl group, a methylphenyl group, a methoxyphenyl group, a hydroxyphenyl group, a naphthyl group, a hydroxynaphthyl group, a benzyl group, a methyl group, an ethyl group, an n-butyl group, an n-octyl group and a cyclohexyl group. Among these, aromatic groups having a substituent and unsubstituted aromatic groups such as a phenyl group, a methylphenyl group, a methoxyphenyl group, a hydroxyphenyl group, and a hydroxynaphthyl group are preferable.

Furthermore, in the general formula (4), X2 represents an organic group which is bonded to Y2 and Y3. In the same manner, X3 represents an organic group which is bonded to groups Y4 and Y5. Y2 and Y3 each represent a group formed when a proton-donating group releases a proton, and the groups Y2 and Y3 in the same molecule are bonded to the silicon atom to form a chelate structure. In the same manner, Y4 and Y5 each represent a group formed when a proton-donating group releases a proton, and the groups Y4 and Y5 in the same molecule are bonded to the silicon atom to form a chelate structure. The groups X2 and X3 may be the same as or different from each other, and the groups Y2, Y3, Y4 and Y5 may be the same as or different from one another. The group represented by -Y2-X2-Y3- and the group represented by -Y4-X3-Y5- in the general formula (4) are each a group formed when a proton donor releases 2 protons. As the proton donor, an organic acid having at least 2 carboxyl groups or hydroxyl groups in the molecule is preferable, an aromatic compound having at least 2 carboxyl groups or hydroxyl groups on carbon constituting the aromatic ring is more preferable, and an aromatic compound having at least 2 hydroxyl groups on the adjacent carbons constituting the aromatic ring is even more preferable.

Examples of the proton donor include catechol, pyrogallol, 1,2-dihydroxynaphthalene, 2,3-dihydroxynaphthalene, 2,2'-biphenol, 1,1'-bi-2-naphthol, salicylic acid, 1-hydroxy-2-naphthoic acid, 3-hydroxy-2-naphthoic acid, chloranilic acid, tannic acid, 2-hydroxybenzyl alcohol, 1,2-cyclohexanediol, 1,2-propanediol and glycerin. Among these, catechol, 1,2-dihydroxynaphthalene and 2,3-dihydroxynaphthalene are more preferred from the viewpoint of a balance between high availability of starting materials and a curing promoting effect.

Moreover, in the general formula (4), Z1 represents an organic group having an aromatic ring or a heterocyclic ring, or an aliphatic group. Specific examples thereof include aliphatic hydrocarbon groups such as a methyl group, an ethyl group, a propyl group, a butyl group, a hexyl group and an octyl group; aromatic hydrocarbon groups such as a phenyl group, a benzyl group, a naphthyl group and a biphenyl group; and reactive substituents such as a glycidyloxypropyl group, a mercaptopropyl group, an aminopropyl group and a vinyl group. Among these, a methyl group, an ethyl group, a phenyl group, a naphthyl group and a biphenyl group are more preferable from the viewpoint of thermal stability.

The adduct of a phosphonium compound and a silane compound can be obtained, for example, by the following method. First, a silane compound such as phenyltrimethoxysilane and a proton donor such as 2,3-dihydroxynaphthalene are added to a flask filled with methanol, and then dissolved therein. Subsequently, a sodium methoxide-methanol solution is added dropwise to the flask under stirring at room temperature. Subsequently, a solution, which was preliminarily prepared by dissolving a tetra-substituted phosphonium halide such as tetraphenyl phosphonium bromide in methanol, is added dropwise to the flask under stirring at room temperature so that crystals are precipitated. The precipitated crystals are filtered, washed with water, and then dried in vacuum to obtain an adduct of a phosphonium compound and a silane compound. However, the production method is not limited to this.

The amount of the curing accelerator (D), which can be used for the fixing resin composition according to the present embodiment, is preferably equal to or more than 0.1% by mass, based on 100% by mass of the total amount of the fixing resin composition. When the amount of the curing accelerator (D) is within the above range, sufficient curing properties can be obtained. Further, the amount of the curing accelerator (D) is preferably equal to or less than 3% by mass, and more preferably equal to or less than 1% by mass, based on 100% by mass of the total value of the entire fixing resin composition. When the amount of the curing accelerator (D) is within the above range, sufficient flowability can be obtained.

The fixing resin composition of the present embodiment may further include a compound (E) in which hydroxyl groups are bonded to respective 2 or more adjacent carbon atoms constituting an aromatic ring (hereinafter may be referred to as the "compound (E)"). By using the compound (E), it is possible to suppress the reaction of the fixing resin composition during the melt kneading and to stably obtain the fixing resin composition even when a phosphorous atom-containing curing accelerator having no latency is used as the curing accelerator (D). Furthermore, the compound (E) also has an effect of decreasing the melt viscosity of the fixing resin composition and increasing flowability. Examples of the compound (E) include a monocyclic compound represented by the following general formula (5) and a polycyclic

compound represented by the following general formula (6). These compounds may have a substituent other than a hydroxyl group.

[Chemical Formula 6]

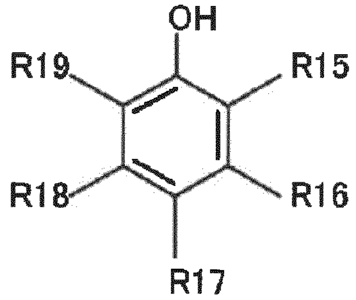

(5)

In the general formula (5), either one of R15 and R19 represents a hydroxyl group, and the other represents a hydrogen atom, a hydroxyl group or a substituent other than a hydroxyl group; and R16, R17 and R18 each represent a hydrogen atom, a hydroxyl group or a substituent other than a hydroxyl group.

[Chemical Formula 7]

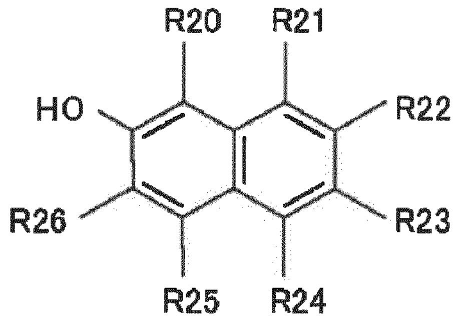

(6)

In the general formula (6), either one of R20 and R26 represents a hydroxyl group, and the other represents a hydrogen atom, a hydroxyl group or a substituent other than a hydroxyl group; and R21, R22, R23, R24 and R25 each represent a hydrogen atom, a hydroxyl group or a substituent other than a hydroxyl group.

Specific examples of the monocyclic compound represented by the general formula (5) include catechol, pyrogallol, gallic acid, a gallic acid ester and a derivative thereof. Further, specific examples of the polycyclic compound represented by the general formula (6) include 1,2-dihydroxynaphthalene, 2,3-dihydroxynaphthalene and a derivative thereof. Among these compounds, from the viewpoint of easy control of flowability and curability, a preferred example thereof is a compound in which hydroxyl groups are respectively bonded to 2 adjacent carbon atoms constituting an aromatic ring. Furthermore, from the viewpoint of volatilization in the kneading step, a more preferable example is a compound having, as mother nuclei, a naphthalene ring which has low volatility and high weighing stability. In this case, the compound (E) may be, as a specific example, a compound having a naphthalene ring such as 1,2-dihydroxynaphthalene, 2,3-dihydroxynaphthalene or derivatives thereof. These compounds (E) may be used singularly or in combination of two or more kinds thereof.

The amount of the compound (E) is equal to or more than 0.01% by mass, more preferably equal to or more than 0.03% by mass, and particularly preferably equal to or more than 0.05% by mass, based on 100% by mass of the entire fixing resin composition. When the amount of the compound (E) is within the above range, it is possible to obtain the sufficient effects of lowering viscosity and of improving flowability for the fixing resin composition. Further, the amount of the compound (E) is equal to or less than 2% by mass, more preferably equal to or less than 0.8% by mass, and particularly preferably equal to or less than 0.5% by mass, based on 100% by mass of the entire fixing resin composition. When the amount of the compound (E) is within the above range, there is little risk of the deterioration in curing properties and physical properties of the curable products of the fixing resin composition.

In the fixing resin composition according to the present embodiment, a coupling agent (F) (hereinafter may be

referred to as the second coupling agent), which is other than the aforementioned first coupling agent, can be further added in order to improve adhesion between the epoxy resin (A1) and the inorganic filler (C). The second coupling agent is the one which undergoes a reaction between the epoxy resin (A1) and the inorganic filler (C), and improves the interfacial strength between the epoxy resin (A1) and the inorganic filler (C).

The second coupling agent is not particularly limited, and examples thereof include epoxysilane, aminosilane, ureidosilane and mercaptosilane. Moreover, when the second coupling agent is used in combination with the aforementioned compound (E), the second coupling agent can enhance the effects of the compound (E) which reduce melt viscosity of the fixing resin composition and improve the flowability thereof.

Examples of the epoxysilane include γ-glycidoxypropyltriethoxysilane, γ-glycidoxypropyltrimethoxysilane, γ-glycidoxypropylmethyldimethoxysilane and β-(3,4-epoxycyclohexyl)ethyltrimethoxysilane. Moreover, examples of the aminosilane include γ-aminopropyltriethoxysilane, γ-aminopropyltrimethoxysilane, N-β(aminoethyl) γ-aminopropyltrimethoxysilane, N-β(aminoethyl) γ-aminopropylmethyldimethoxysilane, N-phenyl γ-aminopropyltriethoxysilane, N-phenyl γ-aminopropyltrimethoxysilane, N-β(aminoethyl) γ-aminopropyltriethoxysilane, N-6-(aminohexyl)-3-aminopropyltrimethoxysilane and N-(3-(trimethoxysilylpropyl)-1,3-benzenedimethanane. Moreover, examples of the ureidosilane include γ-ureidopropyltriethoxysilane and hexamethyldisilazane. A product formed by reacting the primary amino site of aminosilane with ketones or aldehydes may be used as a latent aminosilane coupling agent. Moreover, the aminosilane may have a secondary amino group. Moreover, examples of the mercaptosilane include γ-mercaptopropyltrimethoxysilane, 3-mercaptopropylmethyldimethoxysilane, and also silane coupling agents, which exhibit the same function as a mercaptosilane coupling agent through pyrolysis, such as bis(3 -triethoxysilylpropyl)tetrasulfide and bis(3 -triethoxysilylpropyl)disulfide. Moreover, these silane coupling agents may be blended with the hydrolysates thereof which were preliminarily prepared by a hydrolysis reaction. These silane coupling agents may be used singularly or in combination of 2 or more kinds thereof.

From the viewpoint of continuous moldability, mercaptosilane is preferable. From the viewpoint of flowability, aminosilane is preferable. From the viewpoint of adhesion, epoxysilane is preferable.

The amount of the coupling agent (F) which may be used for the fixing resin composition according to the present embodiment is preferably equal to or more than 0.01% by mass, more preferably equal to or more than 0.05% by mass, and particularly preferably equal to or more than 0.1% by mass, based on 100% by mass of the entire fixing resin composition. When the amount of the coupling agent (F) such as a silane coupling agent is within the above range, good vibration resistance is obtained without lowering the interfacial strength between the epoxy resin (A1) and the inorganic filler (C). Further, the amount of the coupling agent (F) such as a silane coupling agent is preferably equal to or less than 1% by mass, more preferably equal to or less than 0.8% by mass, and particularly preferably equal to or less than 0.6% by mass, based on 100% by mass of the entire fixing resin composition. When the amount of the coupling agent (F) such as a silane coupling agent is within the above range, good vibration resistance is obtained without lowering the interfacial strength between the epoxy resin (A1) and the inorganic filler (C). In addition, when the amount of the coupling agent (F) such as a silane coupling agent is within the above range, good rust resistance is obtained without increasing water absorption of the cured product of the fixing resin composition.

An inorganic flame retardant (G) can be added to the fixing resin composition according to the present embodiment in order to improve flame retardancy. As the inorganic flame retardant (G), a metal hydroxide or a composite metal hydroxide, which can inhibit the combustion reaction through dehydration and heat absorption during combustion, is preferable because the combustion time can be shortened. Examples of the metal hydroxide include aluminum hydroxide, magnesium hydroxide, calcium hydroxide, barium hydroxide and zirconium hydroxide. The composite metal hydroxide may be a hydrotalcite compound containing 2 or more kinds of metal elements, in which at least one metal element is magnesium, and the other metal elements are selected from calcium, aluminum, tin, titanium, iron, cobalt, nickel, copper and zinc. Among these composite metal hydroxides, a magnesium hydroxide/zinc solid solution is commercially easily available. Among these, aluminum hydroxide or a magnesium hydroxide/zinc solid solution is preferable from the viewpoint of continuous moldability. The inorganic flame retardants (G) may be used singularly or in combination of 2 or more kinds thereof. Further, in order to reduce the negative effects to continuous moldability, it is preferable to conduct a surface treatment using silicon compounds such as a silane coupling agent or aliphatic compounds such as a wax, etc.

The amount of the inorganic flame retardant (G) according to the present embodiment is preferably small, and more preferably equal to or less than 0.2% by mass. Usually, a flame retardant must be added to a sealing agent for semiconductor so as to meet the UL standard. However, when the amount of a flame retardant is too much, the curing reaction of a thermosetting resin is inhibited, and so the strength of the fixing member may be lowered. For this reason, in the present embodiment, it is preferable that the addition amount of the inorganic flame retardant (G) is as small as possible.

In the fixing resin composition according to the present embodiment, the concentration of the ionic impurities is preferably equal to or less than 500 ppm, more preferably equal to or less than 300 ppm, and even more preferably equal to or less than 200 ppm, based on the fixing resin composition. Also, the concentration of the ionic impurities is not particularly limited, but is preferably equal to or more than 0 ppb, more preferably equal to or more than 10 ppb, and

even more preferably equal to or more than 100 ppb, based on the fixing resin composition according to the present embodiment. By adjusting the ionic impurities within the above ranges, when the cured product of the fixing resin composition according to the present embodiment is used to form the fixing member, high rust resistance can be maintained even with a treatment under a high temperature and a high humidity.

The ionic impurities in the present embodiment are not particularly limited, but examples thereof include alkali metal ions, alkaline earth metal ions and halogen ions, and more specific examples include sodium ions and chlorine ions. The concentration of the sodium ion is preferably equal to or less than 100 ppm, more preferably equal to or less than 70 ppm, and even more preferably equal to or less than 50 ppm, based on the fixing resin composition according to the present embodiment. Further, the concentration of the chlorine ion is preferably equal to or less than 100 ppm, more preferably equal to or less than 50 ppm, and even more preferably equal to or less than 30 ppm, based on the fixing resin composition according to the present invention. By adjusting the ionic impurities within the above ranges, the corrosion of the electromagnetic steel plate or the magnet can be inhibited.

In the present embodiment, ionic impurities can be reduced by using, for example, an epoxy resin having high purity. As a result, a rotor having excellent durability is obtained.

The concentration of the ionic impurities can be determined as follows. First, the fixing resin composition according to the present embodiment is molded and cured at 175°C for 180 seconds, and then pulverized by a pulverizing machine to obtain powder of a cured product. The obtained powder of the cured product is treated at 120°C for 24 hours in pure water, and ions are extracted in pure water. Then, the concentration of the ionic impurities can be measured by Inductively Coupled Plasma Mass Spectrometry (ICP-MS).

In the fixing resin composition according to the present embodiment, the amount of alumina is preferably equal to or less than 10% by mass, more preferably equal to or less than 7% by mass, and even more preferably equal to or less than 5% by mass, based on 100% by mass of the total amount of the fixing resin composition. The amount of alumina is not particularly limited, but it is preferably, for example, equal to or more than 0% by mass, more preferably equal to or more than 0.01% by mass, and even more preferably equal to or more than 0.1% by mass, based on 100% by mass of the total amount of the fixing resin composition according to the present embodiment. By setting the amount of alumina to equal to or less than the upper limit, it is possible to achieve improvement of flowability and reduction in weight and size of the fixing resin composition according to the present embodiment. In the present embodiment, 0% by mass permits a value within a detection limit.

As the components other than the aforementioned components, the fixing resin composition according to the present embodiment can be appropriately blended with ion scavengers such as hydrotalcites and hydrous oxides of elements selected from the magnesium, aluminum, bismuth, titanium, and zirconium; colorants such as carbon black, red iron oxide and titanium oxide; natural waxes such as a carnauba wax; synthetic waxes such as a polyethylene wax; releasing agents such as paraffin and higher fatty acids and metal salts thereof such as stearic acid and zinc stearate; and low-stress agents such as a polybutadiene compound, an acrylonitrile butadiene copolymerization compound and silicone compounds such as silicone oil and silicone rubber; adhesion-imparting agents such as thiazoline, diazole, triazole, triazine and pyrimidine.

The amount of the colorant in the present embodiment is preferably equal to or more than 0.01% by mass and equal to or less than 1% by mass, and more preferably equal to or more than 0.05% by mass and equal to or less than 0.8% by mass, based on 100% by mass of the total amount of the fixing resin composition according to the present invention. By setting the amount of the colorant within the above range, a step of removing colored impurities is not required, and thus, the workability is improved. Therefore, it is possible to achieve a rotor having a high yield.

The amount of the releasing agent in the present embodiment is not particularly limited, but is preferably, for example, equal to or more than 0.01% by mass, and more preferably equal to or more than 0.05% by mass, based on 100% by mass of the total amount of the fixing resin composition according to the present embodiment. Also, the amount of the releasing agent is, for example preferably equal to or less than 1% by mass, more preferably equal to or less than 0.5% by mass, even more preferably equal to or less than 0.2% by mass, and particularly preferably equal to or less than 0.1% by mass. Usually, when a semiconductor chip is transfer-molded, it is known to add a certain amount of a releasing agent so as to ensure the release of a fixing member from a mold.

The amount of the low-stress agent in the present embodiment is preferably equal to or more than 0.01% by mass and equal to or less than 3% by mass, and more preferably equal to or more than 0.05% by mass and equal to or less than 2% by mass, based on 100% by mass of the total amount of the fixing resin composition according to the present embodiment. When the amount of the low-stress agent is within the aforementioned range, the durability during rotation at a high speed is further improved.

The amount of the ion scavenger in the present embodiment is preferably equal to or more than 0.01% by mass and equal to or less than 3% by mass, and more preferably equal to or more than 0.05% by mass and equal to or less than 2% by mass, based on 100% by mass of the total amount of the fixing resin composition according to the present embodiment. When the amount of the ion scavenger is within the aforementioned range, the durability during rotation at a high speed is further improved.

The amount of the adhesion-imparting agent in the present embodiment is preferably equal to or more than 0.01% by mass and equal to or less than 3% by mass, and more preferably equal to or more than 0.05% by mass and equal to or less than 2% by mass, based on 100% by mass of the total amount of the fixing resin composition according to the present embodiment. When the amount of the adhesion-imparting agent is within the aforementioned range, the durability during rotation at a high speed is further improved.

(Preparation Method of Fixing Resin Composition)

The preparation method of the fixing resin composition according to the present embodiment is not particularly limited, but may be carried out in the following manner. First, a thermosetting resin (A), a phenolic resin-based curing agent (B), and an inorganic filler (C), and preferably other additives or the like are blended in predetermined amounts. Then, the blend is uniformly pulverized and mixed at normal temperature using, for example, a mixer, a jet mill, a ball mill or the like. Then the fixing resin composition is melt-kneaded using a kneading machine such as a heating roll, a kneader or an extruder while heating it to approximately 90°C to 120°C. Then, the fixing resin composition after kneading is cooled and pulverized to obtain a solid fixing resin composition in the granule or powder shape. By appropriately adjusting the conditions of these preparation steps, it is possible to obtain the fixing resin composition having the desired dispersivity and flowability, etc.

The particle size of the powder or granule of the fixing resin composition according to the present embodiment is preferably, for example, equal to or less than 5 mm. By setting the particle size to equal to or less than 5 mm, it is possible to inhibit generation of filling failure during tableting or increased imbalance in the mass of the tablet.

Moreover, it is possible to obtain a tablet by tablet-molding the powder or granule of the obtained fixing resin composition. As a device used in tablet-molding, a single-shot type or multi-communication rotary tableting machine can be used. The shape of the tablet is not particularly limited, but is preferably cylindrical. The temperatures of the male type, the female type and the environment of the tableting machine are not particularly limited, but are preferably equal to or lower than 35°C. If the temperature exceeds 35°C, the viscosity of the fixing resin composition increases by the reaction thereof, and thus, the flowability may be deteriorated. The tableting pressure is preferably within the range of equal to or more than $400 \times 10^4$ Pa and equal to or less than $3000 \times 10^4$ Pa. By setting the tableting pressure to equal to or less than the upper limit, it is possible to prevent the tablet fracture from occurring immediately after the tableting. Meanwhile, by setting the tableting pressure to equal to or more than the lower limit, it is possible to prevent the tablet fracture due to an insufficient aggregation force of a tablet from occurring during transportation. The material of the male or female mold of the tableting machine and the surface treatment thereof are not particularly limited, and known materials can be used. Further, examples of the surface treatment include electrical discharge processing, coating with a releasing agent, plating treatment and polishing.

Furthermore, the glass transition temperature (Tg) of the fixing member according to the present embodiment is preferably equal to or higher than 130°C, and more preferably equal to or higher than 140°C. When the glass transition temperature (Tg) is equal to or higher than the lower limit, it is possible to expect the improvement of reliability. The upper limit of the glass transition temperature (Tg) is not particularly limited, but is preferably equal to or lower than 200°C, and more preferably equal to or lower than 190°C. By setting the glass transition temperature within the above range, it is possible to achieve a rotor having excellent durability.

Furthermore, in the present embodiment, the glass transition temperature (Tg) can be increased by, for example, raising the softening point of the epoxy resin or the curing agent.

The flexural strength of the fixing member according to the present embodiment at 150°C is preferably equal to or more than 70 MPa, and more preferably equal to or more than 100 MPa. When the flexural strength is equal to or more than the lower limit, cracks are not easily generated and the improvement of reliability can be expected. The upper limit of the flexural strength is not particularly limited, but is preferably equal to or less than 300 MPa, and more preferably equal to or less than 250 MPa. By setting the flexural strength within the above range, it is possible to achieve a rotor having excellent durability.

In the present embodiment, the flexural strength can be increased by, for example, subjecting the surface of the filler to the treatment using a coupling agent.

The upper limit of the flexural elastic modulus of the fixing member according to the present invention at 150°C is preferably equal to or less than $1.6 \times 10^4$ MPa, and more preferably equal to or lower than $1.3 \times 10^4$ MPa. When the flexural elastic modulus is equal to or less than the upper limit, it is possible to expect the improvement of reliability due to stress relaxation. The lower limit of the flexural elastic modulus is not particularly limited, but is preferably equal to or more than 5000 MPa, and more preferably equal to or more than 7000 MPa. By setting the flexural elastic modulus within the above range, it is possible to achieve a rotor having excellent durability.

In addition, in the present embodiment, the flexural elastic modulus can be decreased, for example, by increasing the addition amount of a low-stress agent or by decreasing the blending amount of the filler.

In the fixing member according to the present embodiment, the linear expansion coefficient ($\alpha 1$) at a temperature

range of 25°C or higher and the glass transition temperature (Tg) or lower is preferably equal to or more than 10 ppm/°C and equal to or less than 25 ppm/°C, and more preferably equal to or more than 15 ppm/°C and equal to or less than 20 ppm/°C. When the linear expansion coefficient ($\alpha 1$) is within the above ranges, it is possible to achieve the small difference in the thermal expansion between the fixing member and an electromagnetic steel plate, and to prevent the falling-off of the magnet. As a result, it is possible to achieve a rotor having excellent durability.

In addition, in the present embodiment, the linear expansion coefficient ($\alpha 1$) can be decreased by, for example, increasing the blending amount of the inorganic filler.

In the fixing member according to the present embodiment, the linear expansion coefficient ($\alpha 2$) at a temperature range exceeding the glass transition temperature (Tg) is preferably equal to or more than 10 ppm/°C and equal to or less than 100 ppm/°C, and more preferably equal to or more than 20 ppm/°C and equal to or less than 80 ppm/°C. When the linear expansion coefficient ($\alpha 2$) is within the above ranges, it is possible to achieve the small difference in the thermal expansion between the fixing member and an electromagnetic steel plate, and to prevent the falling-off of the magnet. As a result, it is possible to achieve a rotor having excellent durability.

In addition, in the present embodiment, the linear expansion coefficient ($\alpha 2$) can be decreased by, for example, increasing the blending amount of the inorganic filler.

(Manufacturing Method of Rotor)

The manufacturing method of the rotor 100 according to the present embodiment is exemplified as follows. First step is the preparation of the rotor core 110 provided with a plurality of hole portions 150 arranged along the peripheral portion of a through hole through which the rotating shaft 170 penetrates. Subsequently, the magnet 120 is inserted into the hole portion 150. Subsequently, the fixing resin composition is charged in a separation portion 140 between the hole portion 150 and the magnet 120. Subsequently, the resin composition is cured to obtain a fixing member 130. Subsequently, the shaft 170 is inserted into the through hole of the rotor core 110 while fixing and installing the shaft 170 in the rotor core. By using the aforementioned manufacturing method, it is possible to obtain the rotor 100 according to the present embodiment.

In the present embodiment, insert molding is preferably used as a technique used to fill the separation portion 140 with the fixing resin composition. Hereinafter, insert molding will be described in detail.

First, the description of an insert molding device is as follow. Fig. 10 is a cross-sectional view of the upper mold 200 of an insert molding device used in insert molding.

As one example of a method of forming the fixing member 130, a method can be used in which insert molding is performed using the tablet-shaped fixing resin composition. An insert molding device is used for this insert molding. This insert molding device includes the upper mold 200 equipped with the pot 210, in which the tablet-shaped fixing resin composition is supplied, and the flow passage 220 for transferring the fixing resin composition in the molten state; the lower mold (which is not illustrated); the heating unit that heats the upper mold 200 and the lower mold; and the extrusion unit that extrudes the fixing resin composition in the molten state. The insert molding device may be provided with, for example, a transporting function to transport a rotor core or the like.

It is preferable that the upper mold 200 and the lower mold respectively adhere to the upper surface and the lower surface of the rotor core 110 during insert molding. For this reason, the upper mold 200 and the lower mold are in a plate shape, for example. The upper mold 200 and the lower mold of the preset embodiment are different from a conventional mold for a transfer molding, which is used in a method of preparing a semiconductor device, in that the upper mold 200 and the lower mold do not entirely cover the rotor core 110 during insert molding. In other words, the upper mold 200 and the lower mold according to the preset embodiment do not cover the side surfaces of the rotor core 110. Meanwhile, the mold for the transfer molding is configured such that the entire semiconductor chip is arranged in a cavity comprised of an upper mold and a lower mold.

Furthermore, as shown in Fig. 10, the pot 210 may have two independent flow passages 220. In this case, two flow passages 220 that are connected to one pot 210 are arranged in the Y shape. By using this pot, it is possible to fill the fixing resin composition according to the present embodiment into two hole portions 150 from one pot 210. Further, one pot 210 may have only one flow passage used to fill the fixing resin composition in one hole portion 150, and also may have three or more flow passages used to fill the fixing resin composition in three or more hole portions 150. When one pot 210 has a plurality of flow passages 220, a plurality of flow passages 220 may be independent from one another, but may be continuous.

Subsequently, the insert molding according to the present embodiment is described.

First, a rotor core 110 is preheated in an oven or a heat plate, and then fixed on the lower mold of the molding device which is not shown in the drawing. Subsequently, the magnet 120 is inserted in the hole portions 150 of the rotor core 110. Subsequently, the lower mold is raised, and the upper surface of the rotor core 110 is pressed onto the upper mold 200. Thus, the upper surface and the lower surface of the rotor core 110 are sandwiched between and respectively inserted into the upper mold 200 and the lower mold. At this time, the distal end portion of the flow passage 220 in the

upper mold 200 is arranged on the separation portion 140 between the hole portion 150 and the magnet 120. Further, the rotor core 110 is heated by the heat transfer from the lower mold and the upper mold 200 of the molding device. The temperatures of the lower mold and the upper mold 200 of the molding device are controlled to, for example, approximately 150°C to 200°C, which is suitable for molding and curing the fixing resin composition of the rotor core 110. In this state, the tablet-shaped fixing resin composition is supplied into the pot 210 of the upper mold 200. The tablet-shaped fixing resin composition, which is supplied into the pot 210 of the upper mold 200, is heated in the pot 210 and becomes in the molten state.

Subsequently, the fixing resin composition in the molten state is extruded from the pot 210 by a plunger (extrusion mechanism). As a result, the fixing resin composition moves through the flow passage 220, and is charged in the separation portion 140 between the hole portion 150 and the magnet 120. While the fixing resin composition is charged in the separation portion 140, the rotor core 110 is heated by the heat transfer from the mold (the lower mold and the upper mold 200). The fixing resin composition charged in the separation portion 140 is cured by heating the rotor core 110, to thereby form the fixing member 130.

At this time, the temperature condition for the curing of the fixing resin composition may be set to, for example, 150°C to 200°C. Further, the curing time may be set to, for example, 30 seconds to 180 seconds. Through these conditions, the magnet 120 inserted in the hole portion 150 is fixed by the fixing member 130. Thereafter, the upper mold 200 is separated from the upper surface of the rotor core 110. Then, the shaft 170 is inserted into the through hole of the rotor core 110, and the shaft 170 is fixed and installed in the rotor core 110.

By using the aforementioned manufacturing method, it is possible to obtain the rotor 100 of the present embodiment.

The insert molding method according to the present embodiment is different from a transfer molding method used to manufacture a semiconductor device in that demolding is not required.

In the insert molding method, the fixing resin composition is charged to the hole portion 150 of the rotor core 110 through the flow passage 220 of the upper mold 200 under the condition that the upper surface of the rotor core 110 adheres to the upper mold 200. As a result, the resin is not charged between the upper surface of the rotor core 110 and the upper mold 200, the attachment and detachment between the upper mold 200 and the upper surface become easier.

Meanwhile, in the transfer molding method, a resin is charged in a cavity between a semiconductor chip and a mold, and thus, it is necessary to perform demolding from the molded article well. As a result, releasing properties between the mold and the molded article are particularly required for a resin that seals a semiconductor chip.

The rotor 100 of the present embodiment can be mounted on transportation unit such as trains, boats, ships and electric vehicles such as hybrid cars, fuel cell cars and electric cars.

[Examples]

Hereinafter, the present invention will be described in detail with reference to Examples, but the present invention is not limited to the description in Examples in any way. Unless specified otherwise, the "part(s)" and "%" as described below denote "part(s) by mass" and "% by mass", respectively.

The raw material components used in the respective Examples and Comparative Examples are shown below.

(Thermosetting Resin (A))

Epoxy resin 1: Orthocresol novolac type epoxy resin (manufactured by DIC Corporation, EPICLON N-670)
Epoxy resin 2: Orthocresol novolac type epoxy resin (manufactured by Nippon Kayaku Co., Ltd., EOCN-1020-55)
Epoxy resin 3: the manufacturing method is described below.

(Curing Agent (B))

Phenolic resin-based curing agent 1: Novolac type phenolic resin (manufactured by Sumitomo Bakelite Co., Ltd., PR-HF-3)
Phenolic resin-based curing agent 2: Novolac type phenolic resin (manufactured by Sumitomo Bakelite Co., Ltd., PR-51470)
Phenolic resin-based curing agent 3: Phenolaralkyl resin type phenolic resin (manufactured by Meiwa Plastic Industries, Ltd., MEH-7851SS)

(Inorganic Filler (C))

Spherical silica 1 (manufactured by Denki Kagaku Kogyo Kabushiki Kaisha, FB-950, average particle diameter $D_{50}$ 23 $\mu$m, maximum particle diameter $D_{max}$ 71 $\mu$m)
Spherical silica 2 (manufactured by Denki Kagaku Kogyo Kabushiki Kaisha, FB-35, average particle diameter $D_{50}$ 10 $\mu$m, maximum particle diameter $D_{max}$ 71 $\mu$m)

(Curing Accelerator (D))

Curing accelerator: Triphenylphosphine (manufactured by K·I Chemical Industry Co., Ltd. PP-360)

(Silane Coupling Agent (F))

Silane coupling agent 1: γ-Aminopropyltriethoxysilane (manufactured by Shin-Etsu Chemical Co., Ltd., KBE-903)
Silane coupling agent 2: Phenylaminopropyltrimethoxysilane (manufactured by Dow Corning Toray Co., Ltd., CF4083)
Silane coupling agent 3: γ-Glycidoxypropyltrimethoxysilane (manufactured by Chisso Corporation., GPS-M)
Silane coupling agent 4: γ-Mercaptopropyltrimethoxysilane

(Other Additives)

Releasing agent: Carnauba wax (manufactured by Nikko Fine Corporation, Nikko Carnauba)
Ion Scavenger: Hydrotalcite (manufactured by Kyowa Chemical Industry Co., Ltd., trade name DHT-4H)
Colorant: Carbon black (manufactured by Mitsubishi Chemical Corporation, MA600)
Triazole: 3-Amino-1,2,4-triazole-5-tiol
Low-stress agent: Silicone resin (manufactured by Shin-Etsu Chemical Co., Ltd., KMP-594)
Flame retardant: Aluminum hydroxide (manufactured by Sumitomo Chemical Co., Ltd., CL-303, average particle diameter $D_{50}$ 3.5 $\mu$m,)

Hereinafter, the production method of epoxy resin 3 will be described. Firstly, the synthesis method of the precursor phenol resin (P1), which was used for the synthesis of epoxy resin 3, will be described.

For the phenol resin (P0) which was the starting material, the phenylene structure-containing phenolaralkyl resin (manufactured by Meiwa Plastic Industries, Ltd., MEH-7800SS, Hydroxide equivalent 175 g/eq, softening point 67°C) 525 parts by mass, 1-cloromethylnaphtalene (manufactured by Tokyo Chemical Industry Co., Ltd., melting point 20°C, molecular weight 176.6, purity 99.1%) 53 parts by mass, methyl isobutyl ketone 580 parts by mass, and tetraethylammonium chloride (manufactured by Tokyo Chemical Industry Co., Ltd., melting point 39°C, molecular weight 176.6, purity 99.1%) 6 parts by mass were weighed and added in the separable flask. Then, the separable flask was equipped with the starring machine, the thermometer, the reflux condenser and nitrogen entrance, and the stirring was carried out with nitrogen bubbling to thereby dissolve the components.

Next, the heating started, and 49% sodium hydroxide aqueous solution 27 parts by mass (0.33 mol) was gradually added to the system while maintaining the temperature thereof within the range of 65°C or more and 75°C or less. Then, the reaction temperature was raised, and the reaction proceeded for 3 hours while maintaining the reaction temperature within the range of 95°C or more and 105°C or less. After the termination of the reaction, the reaction system was cooled to room temperature. Subsequently, monosodium phosphate 10 parts by mass was added thereto to carry out the neutralization. The process (water washing) of adding the distilled water 300 parts to the reaction mixture, shaking the reaction mixture, and taking out the aqueous layer was repeated until the washing water became neutral. Then, the methyl isobutyl ketone was distilled away at 125°C under the depressurization condition of 2 mmHg to thereby obtain the precursor phenol resin (P1) represented by the following formula (I) (c represents an integer of 1-20, d represents an integer of 0-20, and the both ends of the structural formula are hydrogen atoms. In the polymer of d=0, c represents an integer of 2-20, the repeated units of the phenyl aralkyl groups ((c-1) pieces) must be inserted between the repeated units of the hydroxyphenylene groups (c pieces). In the polymer of d≥1, (c+d) represents an integer of 2-20, the repeated units of the hydroxyphenylene group (c pieces) and the repeated units of the naphthylmethoxyphenylene group (d pieces)

may be consecutively aligned or may be alternatively or randomly aligned as long as the repeated units of the phenyl aralkyl groups ((c+d-1) pieces) must be inserted between the aforementioned repeated units. Hydroxide equivalent 210).

[Chemical Formula 8]

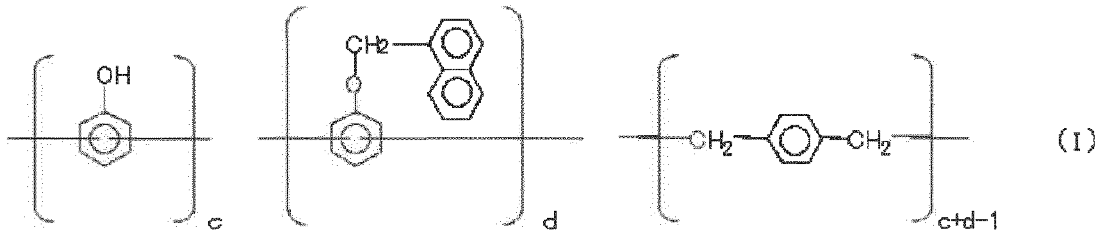

Next the synthesis method of epoxy resin 3 using the precursor phenol resin (P1) will be described.

The separable flask was equipped with the starring machine, the thermometer, the reflux condenser and nitrogen entrance, and then the precursor phenol resin (P1) 500 parts by mass, epichlorohydrin 1320 parts by mass and dimethylsulfoxide 260 parts by mass were added thereto. After the reaction mixture was heated to 45°C and dissolved, sodium hydroxide (solid fine-grained shape, purity 99%) 97 parts by mass was added thereto for 2 hours. Then, the reaction temperature was raised to 50°C, and the reaction proceeded for 2 hours. Moreover, the reaction temperature was raised to 70°C, and the reaction proceeded for 2 hours. After the reaction, the process (water washing) of adding the distilled water 300 parts to the reaction mixture, shaking the reaction mixture, and taking out the aqueous layer was repeated until the washing water became neutral. Then, the epichlorohydrin and dimethylsulfoxide of the oil layer were distilled away at 125°C under the depressurization condition of 2 mmHg. Methyl isobutyl ketone 1100 parts by mass was added to the obtained solid production to dissolve the obtained solid production therein, and the solution was heated to 70°C. Then, 30 mass% sodium hydroxide aqueous solution 31 parts was added thereto for 1 hour, and the reaction proceeded for 1 hour. Thereafter, the reaction system was stood alone to take out the aqueous layer. Then, the distilled water 150 parts by mass was added to the oil layer to carry out the water washing process, and this water washing process was repeated until the washing water became neutral. After the water washing process, the methyl isobutyl ketone was distilled away by heating and depressurization to thereby obtain epoxy resin 3 represented by the following formula (II)

(c represents an integer of 1-20, d represents an integer of 0-20, and the both ends of the structural formula are hydrogen atoms. In the polymer of d=0, c represents an integer of 2-20, the repeated units of the phenyl aralkyl groups ((c-1) pieces) must be inserted between the repeated units of the substituted or unsubstituted glycidoxyphenylene groups (c pieces). In the polymer of d≥1, (c+d) represents an integer of 2-20, the repeated units of the substituted or unsubstituted glycidoxyphenylene groups (c pieces) and the repeated units of the naphthylmethoxyphenylene group (d pieces) may be consecutively aligned or may be alternatively or randomly aligned as long as the repeated units of the phenyl aralkyl groups ((c+d-1) pieces) must be inserted between the aforementioned repeated units. Epoxy equivalent 281, Softening point 56°C, ICI viscosity at 150°C 1.0 dPa·s).

[Chemical Formula 9]

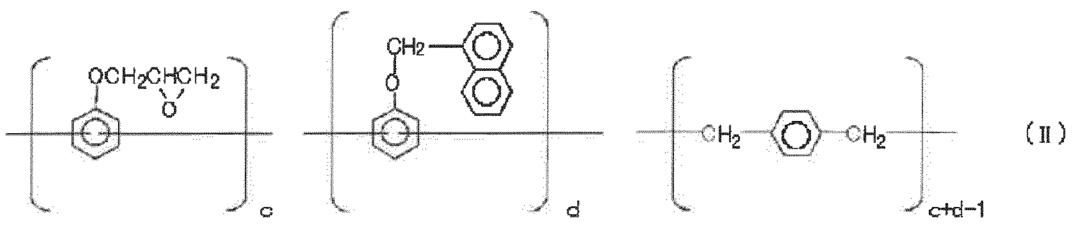

In Examples 1-6, the inorganic filler (C), which had been previously subjected to the silane coupling treatment, was used as the treated silica. The silane coupling treatment for the inorganic filler (C) was carried out as follows.

Firstly, spherical silica 1 and spherical silica 2 were respectively dried at 105°C for 12 hours. Subsequently, spherical silica 1 of 60 parts by weight and spherical silica 2 of 20 parts by weight were added in the mixer, and stirred for 10 minutes. Subsequently, the mixture of spherical silica 1 and spherical silica 2 was stirred for 20 minutes while spraying silane coupling agent 1 of 0.3 parts by mass to the mixture. The spraying time of silane coupling agent 1 was approximately 10 minutes. Also, the humidity in the mixer was 50% or lower. Thereafter, the stirring was continued for 60 minutes to mix the silica and silane coupling agent 1.

Next, the mixture was taken out from the mixer, and was subjected to the aging treatment under the condition of 20±5°C for 7 days. Then, the mixture was sieved with 200 mesh to thereby remove the coarse particles. Through the aforementioned treatment, the inorganic filler (C) subjected to the silane coupling treatment was obtained. Herein, the ribbon blender was used as the mixer. Also, the rotation frequency of the ribbon blender was 30 rpm.
The silane coupling agents 2, 3 and 4 were added to the resin.

(Examples and Comparative Examples)

In Examples and Comparative Examples, the mixture, which was formed by blending the respective components according to the blending amounts shown in Tables, was mixed at a normal temperature using a mixer to obtain the powdery intermediate. The obtained powdery intermediate was loaded in an automatic feeder (hopper), supplied quantitatively to a heating roll at 80°C to 100°C, and melt-kneaded. Thereafter, the intermediate was cooled and then pulverized to obtain the fixing resin composition. The obtained fixing resin composition was tablet-molded using the molding device to obtain the tablet.
For the obtained fixing resin composition, the measurements and evaluations as shown below were carried out.
In Examples 1-6 and Comparative Examples 1-3, the curing under the condition of heating at 175°C for 4 hours was carried out to obtain the cured product of the rotor-fixing resin composition. Also, for the measurement described below, the cured product of the rotor-fixing resin composition was molded into the shape in accordance with JIS K7162 and then cured to thereby obtain the test piece.
Also, the blending proportions of the respective components in Examples 1-6 and Comparative Examples 1-3 are described in Tables 1-3.
Hereinafter, the measurements and evaluations, to which the respective cured products obtained by using the blending proportions described in Tables 1-3 were subjected, are described below in detail

(Evaluation Items)

Tensile elongation at break: The cured product of the rotor-fixing resin composition, which had been molded into a dumbbell shape in accordance with JIS K7162 (hereinafter referred to as a test piece), was subjected to a tensile test under the conditions of a temperature of 120°C or 25°C, a test load of 20 MPa and 100 hours. Then, the tensile elongation at break of the test piece was measured. The unit of the tensile elongation at break is %. Also, the tensile elongation at break is the value which is determined by loading time and load. In specific, the tensile elongation at break is the value which can be obtained by the following equation wherein $X_0$ mm represents the whole length of the cured product molded into a dumbbell shape before a tensile test, and $X_1$ mm represents the whole length thereof after a tensile test. Moreover, the creep testing machine (manufactured by A&D Company, Ltd., CP5-L-200) and the strain gauge (manufactured by Kyowa Electronic Instruments Co., Ltd., KFG-5-120) were used in the measurement of the tensile elongation at break.

$$\text{Tensile elongation at break [\%]} = \{(X_1\ \text{mm} - X_0\ \text{mm}) / X_0\ \text{mm}\} \times 100$$

Elastic modulus: The cured product of the rotor-fixing resin composition, which had been molded into a dumbbell shape in accordance with JIS K7162 (hereinafter referred to as a test piece), was subjected to the 100-hours tensile test under the conditions of a temperature of 120°C or 25°C, a test load of 20 MPa and 100 hours. The unit of the elastic modulus was set to MPa.
The evaluation results regarding the aforementioned evaluation items are shown in the following Tables 1-4 together with the blending proportions of the respective components. Herein, "o" represents presence, and "×" represents absence.

[Table 1]

| | | Example 1 | Example 2 | Example 3 |
|---|---|---|---|---|
| Thermosetting resin (A) | Epoxy resin 1 | - | 8.7 | 12.9 |
| | Epoxy resin 2 | 5.1 | 3.7 | - |
| | Epoxy resin 3 | 7.7 | - | - |

(continued)

| | | Example 1 | Example 2 | Example 3 |
|---|---|---|---|---|
| Curing agent (B) | Phenolic resin-based curing agent 1 | 2.0 | 5.8 | 1.6 |
| | Phenolic resin-based curing agent 2 | 3.0 | - | 3.7 |
| | Phenolic resin-based curing agent 3 | - | - | - |
| Inorganic filler (C) | Spherical silica 1 | 60.0 | 60.0 | 60.0 |
| | Spherical silica 2 | 20.0 | 20.0 | 20.0 |
| Curing accelerator (D) | Triphenylphosphine | 0.3 | 0.3 | 0.3 |
| Silane coupling agent (F) | Silane coupling agent 1 | 0.3 | 0.3 | 0.3 |
| | Silane coupling agent 2 | 0.1 | 0.1 | 0.1 |
| | Silane coupling agent 3 | 0.1 | 0.1 | 0.1 |
| | Silane coupling agent 4 | 0.1 | 0.1 | 0.1 |
| Other additives | Releasing agent | 0.2 | 0.2 | - |
| | Ion Scavenger | 0.1 | 0.1 | 0.1 |
| | Colorant | 0.3 | 0.3 | 0.3 |
| | Triazole | 0.1 | 0.1 | - |
| | Low-stress agent | 0.5 | 0.2 | 0.5 |
| | Flame retardant | - | - | - |
| Total | | 100 | 100 | 100 |
| Equivalent ratio (EP)/(OH) | | 1.11 | 1.10 | 1.20 |
| Wax | | ∘ | ∘ | × |
| Adhesion auxiliary agent | | ∘ | ∘ | × |
| Filling amount of filler [%] | | 80 | 80 | 80 |

[Table 2]

| | | Example 4 | Example 5 | Example 6 |
|---|---|---|---|---|
| Thermosetting resin (A) | Epoxy resin 1 | - | - | 6.3 |
| | Epoxy resin 2 | - | 7.4 | - |
| | Epoxy resin 3 | 13.0 | 7.4 | 2.7 |
| Curing agent (B) | Phenolic resin-based curing agent 1 | 1.5 | 4.1 | 2.2 |
| | Phenolic resin-based curing agent 2 | 2.0 | - | 1.5 |
| | Phenolic resin-based curing agent 3 | 1.5 | 4.1 | - |
| Inorganic filler (C) | Spherical silica 1 | 60.0 | 40.0 | 55.0 |
| | Spherical silica 2 | 20.0 | 35.0 | 30.0 |
| Curing accelerator (D) | Triphenylphosphine | 0.3 | 0.4 | 0.3 |
| Silane coupling agent (F) | Silane coupling agent 1 | 0.3 | 0.3 | 0.3 |
| | Silane coupling agent 2 | 0.1 | 0.1 | 0.1 |
| | Silane coupling agent 3 | 0.1 | - | 0.1 |
| | Silane coupling agent 4 | 0.1 | 0.1 | 0.1 |

(continued)

| | | Example 4 | Example 5 | Example 6 |
|---|---|---|---|---|
| Other additives | Releasing agent | - | 0.2 | 0.2 |
| | Ion Scavenger | 0.1 | 0.1 | 0.1 |
| | Colorant | 0.3 | 0.3 | 0.3 |
| | Triazole | 0.1 | 0.1 | 0.1 |
| | Low-stress agent | 0.5 | 0.5 | 0.8 |
| | Flame retardant | - | - | - |
| Total | | 100 | 100 | 100 |
| Equivalent ratio (EP)/(OH) | | 1.12 | 1.08 | 1.12 |
| Wax | | × | ◦ | ◦ |
| Adhesion auxiliary agent | | ◦ | ◦ | ◦ |
| Filling amount of filler [%] | | 80 | 75 | 85 |

[Table 3]

| | | Comparative Example 1 | Comparative Example 2 | Comparative Example 3 |
|---|---|---|---|---|
| Thermosetting resin (A) | Epoxy resin 1 | - | 6.2 | - |
| | Epoxy resin 2 | 12.9 | - | 6.8 |
| | Epoxy resin 3 | - | 6.2 | - |
| Curing agent (B) | Phenolic resin-based curing agent 1 | 5.5 | - | - |
| | Phenolic resin-based curing agent 2 | - | 5.1 | - |
| | Phenolic resin-based curing agent 3 | - | - | 6.1 |
| Inorganic filler (C) | Spherical silica 1 | 50.0 | 50.0 | 50.0 |
| | Spherical silica 2 | 20.0 | 30.0 | 35.0 |
| Curing accelerator (D) | Triphenylphosphine | 0.3 | 0.3 | 0.3 |
| Silane coupling agent (F) | Silane coupling agent 1 | - | 0.3 | - |
| | Silane coupling agent 2 | 0.1 | 0.1 | 0.1 |
| | Silane coupling agent 3 | 0.1 | - | 0.1 |
| | Silane coupling agent 4 | 0.1 | 0.1 | 0.1 |
| Other additives | Releasing agent | - | 0.2 | 0.2 |
| | Ion Scavenger | 0.1 | 0.1 | 0.1 |
| | Colorant | 0.3 | 0.3 | 0.3 |
| | Triazole | 0.1 | - | 0.1 |
| | Low-stress agent | 0.5 | 1.0 | 0.9 |
| | Flame retardant | 10.0 | - | - |
| Total | | 100 | 100 | 100 |

(continued)

| | Comparative Example 1 | Comparative Example 2 | Comparative Example 3 |
|---|---|---|---|
| Equivalent ratio (EP)/(OH) | 1.26 | 1.05 | 1.15 |
| Wax | × | ◦ | ◦ |
| Adhesion auxiliary agent | ◦ | × | ◦ |
| Filling amount of filler [%] | 80 | 80 | 85 |

[Table 4]

| | Example 1 | Example 2 | Example 3 | Example 4 | Example 5 | Example 6 | Comparative Example 1 | Comparative Example 2 | Comparative Example 3 |
|---|---|---|---|---|---|---|---|---|---|
| Tensile elongation at break -a (120°C) [%] | 0.95 | 0.91 | 1.25 | 0.74 | 1.6 | 1.55 | 1.72 | 1.98 | 1.87 |
| Tensile elongation at break-b (25°C) [%] | 0.35 | 0.3 | 0.43 | 0.23 | 0.48 | 0.46 | 0.64 | 0.78 | 0.73 |
| Elastic modulus a (120°C) [MPa] | 13200 | 15300 | 13000 | 14400 | 10000 | 9500 | 6000 | 5300 | 6500 |
| Elastic modulus b (25°C) [MPa] | 28000 | 30000 | 27000 | 29000 | 22000 | 27000 | 12000 | 12400 | 15000 |

Tensile elongation at break-a is the barometer that indicates the durability of a permanent magnet in a rotor core. In specific, when a rotor-fixing resin composition with small tensile elongation at break-a is used as a material, it is possible to obtain a rotor core excellent in positional stability and durability. As can be seen in Table 4, the cured products of Examples 1-6 had the lower values of tensile elongation at break-a than those of Comparative Examples. These results reveal that it is possible to obtain a rotor core excellent in deformation resistance, positional stability and durability when rotor cores are produced by using the rotor-fixing resin compositions having the compositions described in Examples.

In the rotor-fixing resin compositions described in Examples 1-6, the optimizations of the blending of a resin composition, the surface treatment of silica (drying before treatment, pH management, aging time), and the other treatments were carried out to improve tensile elongation at break-a. In Examples 1-6, the optimizations were carried out by using the non-conventional refinements in the process, and the details thereof are described below.

In specific, the technical refinements carried out in Example 1 included the presence of 2 kinds of the epoxy resins containing novel epoxy resin 3, the use of 2 kinds of the phenolic resin-based curing agents, and the optimization of the silane coupling treatment for the inorganic filler (C). The technical refinements carried out in Example 2 included the optimization of the silane coupling treatment for the inorganic filler (C). The technical refinements carried out in Example 3 included the absence of wax and the optimization of the silane coupling treatment for the inorganic filler (C). The technical refinements carried out in Example 4 included the presence of the novel epoxy resin, the use of 3 kinds of the phenolic resin-based curing agents, the absence of wax, and the optimization of the silane coupling treatment for the inorganic filler (C). The technical refinements carried out in Example 5 included the presence of 2 kinds of the epoxy resins containing novel epoxy resin 3, the use of 2 kinds of the phenolic resin-based curing agents, and the optimization of the silane coupling treatment for the inorganic filler (C). The technical refinements carried out in Example 6 include the presence of novel epoxy resin 3 and the optimization of the silane coupling treatment for the inorganic filler (C).

[Reference Signs List]

100 ROTOR
110 ROTOR CORE
112 ELECTROMAGNETIC STEEL PLATE
116 GROOVES
118a END PLATE
118b END PLATE
120 MAGNET
121 SIDE WALL
123 SIDE WALL
125 SIDE WALL
127 SIDE WALL
130 FIXING MEMBER
132 SLIT-FILLIMG RESIN MENBER
140 SEPARATION PORTION
150 HOLE PORTION
151 SIDE WALL
152 SLIT
153 SIDE WALL
154a HOLE PORTION
154b HOLE PORTION
155 SIDE WALL
156 HOLE PORTION
157 SIDE WALL
160 SWAGED PORTION
170 ROTATING SHAFT
200 UPPER MOLD
210 POT
220 FLOW PASSAGE

**Claims**

1. A rotor-fixing resin composition for use for forming a fixing member (130) comprised by a rotor (100), wherein the rotor (100) comprises a rotor core (110) fixed and installed on a rotating shaft (170) in which a plurality of hole portions (150) are provided along the peripheral portion of the rotating shaft (170), a magnet (120) inserted in the hole portions (150), and the fixing member (130) that fixes the magnet (120) and wherein the fixing member (130) is provided in a separation portion (140) between the hole portion (150) and the magnet (120),
the rotor-fixing resin composition comprising:

    an epoxy resin-containing thermosetting resin;
    a curing agent;
    a silane coupling agent; and
    silica as an inorganic filler,
    wherein the inorganic filler is subjected to a surface treatment using the silane coupling agent in which the silane coupling agent and the inorganic filler are mixed, and the mixture is subjected to an aging treatment under the condition of 20$\pm$5°C for 7 days or more to couple the silane coupling agent to the surface of the inorganic filler,
    wherein the epoxy resin includes at least one selected from the group consisting of a biphenyl-based epoxy resin, a phenolaralkyl-based epoxy resin, a phenol novolac-based epoxy resin, an orthocresol novolac-based epoxy resin, a bisphenol-based epoxy resin, a bisnaphthol-based epoxy resin, a dicyclopentadiene-based epoxy resin, a dihydroanthracenediol-based epoxy resin, and a triphenylmethane-based epoxy resin,
    wherein the curing agent includes at least one phenolic resin selected from the group consisting of a novolac-based phenolic resin, a phenolaralkyl resin, a naphtholbased phenolic resin, and a phenolic resin formed by reacting hydroxybenzaldehyde, formaldehyde and phenol,
    wherein the amount of the inorganic filler is equal to or more than 50% by mass and equal to or less than 93% by mass based on 100% by mass of the total amount of the rotor-fixing resin composition,
    wherein the rotor-fixing resin composition is in a powder form, a granule form or a tablet form,
    a tensile elongation at break-a at 120°C is 0.1% or higher and 1.7% or lower,
    wherein an elastic modulus of the cured product at 120°C is 0.8 $\times$ $10^4$ MPa or higher,
    wherein an elastic modulus of the cured product at 25°C is 1.4 $\times$ $10^4$ MPa or higher,
    wherein the tensile elongation at break-a is calculated by the following Equation, wherein Xo mm represents the whole length of the test piece before a tensile test and $X_1$ mm represents the whole length of the test piece after the tensile test, wherein the tensile elongation at break-a is obtained by subjecting a test piece to a tensile test pursuant to JIS K7162 under conditions of a temperature of 120°C, a test load of 20 MPa and 100 hours by using a creep testing machine and a strain gauge for the measurement of the tensile elongation at break:

$$\text{Equation: Tensile elongation at break-a} = \{(X_1\ \text{mm} - X_0\ \text{mm}) / X_0\ \text{mm}\} \times 100,$$

    and
    the test piece is a cured product produced by subjecting the rotor-fixing resin composition to curing by heating at 175 °C for 4 hours, and molding to a dumbbell shape pursuant to JIS K7162.

2. The rotor-fixing resin composition according to claim 1, wherein

    a tensile elongation at break-b is 0.1% or higher and 0.5% or lower, and
    the tensile elongation at break-b is obtained by subjecting a test piece to a tensile test under conditions of a temperature of 25°C, a test load of 20 MPa and 100 hours.

3. The rotor-fixing resin composition according to claim 1 or 2, wherein the amount of the thermosetting resin is equal to or more than 5% by mass and equal to or less than 40% by mass based on 100% by mass of the total amount of the rotor-fixing resin composition, and
the amount of the epoxy resin is equal to or more than 70% by mass and equal to or less than 100% by mass based on 100% by mass of the thermosetting resin.

4. The rotor-fixing resin composition according to any one of claims 1 to 3, wherein the equivalent ratio (EP)/(OH) of the number of epoxy groups (EP) in the total thermosetting resin to the number of phenolic hydroxyl groups (OH) in the entire phenolic resin is equal to or more than 1.0 and equal to or less than 1.2.

**5.** A rotor (100) comprising:

a rotor core (110) fixed and installed on a rotating shaft (170) in which a plurality of hole portions (150) are provided along the peripheral portion of the rotating shaft (170);
a magnet (120) inserted in the hole portions (150); and
a fixing member (130) provided in a separation portion (140) between the hole portion (150) and the magnet (120), wherein
the fixing member (130) is formed using the rotor-fixing resin composition according to any one of claims 1 to 4.

**6.** The rotor (100) according to claim 5, wherein a width of the separation portion (140) between the hole portion (150) and the magnet (120) is 20 μm or higher and 500 μm or lower.

**7.** An automobile which is manufactured using the rotor (100) according to claim 5 or 6.

## Patentansprüche

**1.** Rotorbefestigungsharzzusammensetzung zur Verwendung zum Bilden eines Befestigungsbauteils (130), das von einem Rotor (100) umfasst wird, wobei der Rotor (100) ein Rotorkernstück (110), befestigt und eingebaut auf einer rotierenden Welle (170), in welchem eine Vielzahl an Lochabschnitten (150) entlang des peripheren Abschnitts der rotierenden Welle (170) bereitgestellt sind, einen Magneten (120), eingefügt in die Lochabschnitte (150), und das Befestigungsbauteil (130) umfasst, das den Magneten (120) befestigt und wobei das Befestigungsbauteil (130) in einem Trennungsabschnitt (140) zwischen dem Lochabschnitt (150) und dem Magneten (120) bereitgestellt ist, wobei die Rotorbefestigungsharzzusammensetzung umfasst:

ein epoxidharz-enthaltendes wärmehärtbares Harz;
ein Härtungsmittel;
ein Silankupplungsmittel; und
Siliziumdioxid als einen anorganischen Füllstoff,
wobei der anorganische Füllstoff einer Oberflächenbehandlung unter Verwendung des Silankupplungsmittels ausgesetzt ist, in welcher das Silankupplungsmittel und der anorganische Füllstoff gemischt werden und das Gemisch einer Alterungsbehandlung unter der Bedingung von 20±5°C für 7 Tage oder mehr ausgesetzt ist, um das Silankupplungsmittel an die Oberfläche des anorganischen Füllstoffs zu kuppeln,
wobei das Epoxidharz mindestens eines beinhaltet, ausgewählt aus der Gruppe, bestehend aus einem Biphenyl-basierten Epoxidharz, einem Phenolaralkyl-basierten Epoxidharz, einem Phenol-Novolac-basierten Epoxidharz, einem Orthocresol-Novolac-basierten Epoxidharz, einem Bisphenol-basierten Epoxidharz, einem Bisnaphtholbasierten Epoxidharz, einem Dicyclopentadien-basierten Epoxidharz, einem Dihydroantracendiol-basierten Epoxidharz und einem Triphenylmethan-basierten Epoxidharz,
wobei das Härtungsmittel mindestens ein Phenolharz beinhaltet, ausgewählt aus der Gruppe, bestehend aus einem Novolac-basierten Phenolharz, einem Phenolaralkylharz, einem Naphthol-basierten Phenolharz und einem Phenolharz, das durch Umsetzen von Hydroxybenzaldehyd, Formaldehyd und Phenol gebildet wird,
wobei die Menge des anorganischen Füllstoffs gleich oder mehr als 50 Massen-% und gleich oder weniger als 93 Massen-% bezogen auf 100 Massen-% der Gesamtmenge der Rotorbefestigungsharzzusammensetzung ist,
wobei die Rotorbefestigungsharzzusammensetzung in einer Pulverform, einer Granulatform oder einer Tablettenform ist,
eine Zugdehnung bei Bruch-a bei 120°C 0,1% oder höher und 1,7% oder geringer ist,
wobei ein Elastizitätsmodul des gehärteten Produkts bei 120°C 0,8 × $10^4$ MPa oder höher ist,
wobei ein Elastizitätsmodul des gehärteten Produkts bei 25°C 1,4 × $10^4$ MPa oder höher ist,
wobei die Zugdehnung bei Bruch-a mit der folgenden Gleichung berechnet wird, wobei Xo mm die gesamte Länge des Teststücks vor einem Zugversuch darstellt und $X_1$ mm die gesamte Länge des Teststücks nach dem Zugversuch darstellt, wobei die Zugdehnung bei Bruch-a durch Aussetzen eines Teststücks einem Zugversuch gemäß JIS K7162 unter Bedingungen einer Temperatur von 120°C, einer Testbelastung von 20 MPa und 100 Stunden unter Verwendung einer Kriechtestmaschine und eines Belastungsmessgeräts für die Messung der Zugdehnung bei Bruch erhalten wird:

$$\text{Gleichung: Zugdehnung bei Bruch-a} = \{(X_1\ \text{mm} - X_0\ \text{mm}) / X_0\ \text{mm}\} \times 100$$

und
das Teststück ein gehärtetes Produkt ist, das durch Aussetzen der Rotorbefestigungsharzzusammensetzung einem Härten durch Erwärmen bei 175°C für 4 Stunden und Formen in eine Hantelform gemäß JIS K7162 hergestellt wird.

2. Rotorbefestigungsharzzusammensetzung nach Anspruch 1, wobei

eine Zugdehnung bei Bruch-b 0,1% oder höher und 0,5% oder geringer ist und
die Zugdehnung bei Bruch-b durch Aussetzen eines Teststücks einem Zugversuch unter Bedingungen einer Temperatur von 25°C, einer Testbelastung von 20 MPa und 100 Stunden erhalten wird.

3. Rotorbefestigungsharzzusammensetzung nach Anspruch 1 oder 2, wobei die Menge des wärmehärtbaren Harzes gleich oder mehr als 5 Massen-% und gleich oder weniger als 40 Massen-% bezogen auf 100 Massen-% der Gesamtmenge der Rotorbefestigungsharzzusammensetzung ist und
die Menge des Epoxidharzes gleich oder mehr als 70 Massen-% und gleich oder weniger als 100 Massen-% bezogen auf 100 Massen-% des wärmehärtbaren Harzes ist.

4. Rotorbefestigungsharzzusammensetzung nach einem der Ansprüche 1 bis 3, wobei das Äquivalenzverhältnis (EP)/(OH) der Anzahl der Epoxidgruppen (EP) im gesamten wärmehärtbaren Harz zur Anzahl der phenolischen Hydroxylgruppen (OH) im vollständigen Phenolharz gleich oder mehr als 1,0 und gleich oder weniger als 1,2 ist.

5. Rotor (100), umfassend:

ein Rotorkernstück (110), befestigt und eingebaut auf einer rotierenden Welle (170), in welchem eine Vielzahl an Lochabschnitten (150) entlang des peripheren Abschnitts der rotierenden Welle (170) bereitgestellt sind;
einen Magneten (120), eingefügt in die Lochabschnitte (150); und
ein Befestigungsbauteil (130), bereitgestellt in einem Trennungsabschnitt (140) zwischen dem Lochabschnitt (150) und dem Magneten (120), wobei
das Befestigungsbauteil (130) unter Verwendung der Rotorbefestigungsharzzusammensetzung nach einem der Ansprüche 1 bis 4 gebildet wird.

6. Rotor (100) nach Anspruch 5, wobei eine Breite des Trennungsabschnitts (140) zwischen dem Lochabschnitt (150) und dem Magneten (120) 20 $\mu$m oder höher und 500 $\mu$m oder geringer ist.

7. Auto, welches unter Nutzung des Rotors (100) nach Anspruch 5 oder 6 hergestellt wurde.

## Revendications

1. Composition de résine pour fixation de rotor destinée à être utilisée pour former un élément de fixation (130) compris par un rotor (100), dans laquelle le rotor (100) comprend un noyau de rotor (110) fixé et installé sur un arbre rotatif (170) dans lequel une pluralité de portions d'orifice (150) sont prévues le long de la portion périphérique de l'arbre rotatif (170), un aimant (120) inséré dans les portions d'orifice (150), et l'élément de fixation (130) qui fixe l'aimant (120) et dans laquelle l'élément de fixation (130) est prévu dans une portion de séparation (140) entre la portion d'orifice (150) et l'aimant (120),
la composition de résine pour fixation de rotor comprenant :

une résine thermodurcissable contenant une résine époxy ;
un agent durcissant ;
un agent adhésif au silane ; et
de la silice en tant que charge inorganique,
dans laquelle la charge inorganique est soumise à un traitement de surface en utilisant l'agent adhésif au silane dans lequel l'agent adhésif au silane et la charge inorganique sont mélangés, et le mélange est soumis à un traitement de vieillement dans la condition de 20+/-5 °C pendant 7 jours ou plus pour coupler l'agent adhésif au silane à la surface de la charge inorganique,
dans laquelle la résine époxy inclut au moins une résine sélectionnée parmi le groupe constitué d'une résine époxy à base de biphényle, d'une résine époxy à base de phénolaralkyle, d'une résine époxy à base de phénol novolaque, d'une résine époxy à base d'orthocrésol novolaque, d'une résine époxy à base de bisphénol, d'une

résine époxy à base de bisnaphtol, d'une résine époxy à base de dicyclopentadiène, d'une résine époxy à base de dihydroanthracènediol et d'une résine époxy à base de triphénylméthane,
dans laquelle l'agent durcissant inclut au moins une résine phénolique sélectionnée parmi le groupe constitué d'une résine phénolique à base de novolaque, d'une résine de phénolaralkyle, d'une résine phénolique à base de naphtol et d'une résine phénolique formée en faisant réagir de l'hydroxybenzaldéhyde, du formaldéhyde et du phénol,
dans laquelle la quantité de la charge inorganique est supérieure ou égale à 50 % en masse et inférieure ou égale à 93 % en masse basée sur 100 % en masse de la quantité totale de la composition de résine pour fixation de rotor,
dans laquelle la composition de résine pour fixation de rotor est sous forme de poudre, sous forme de granulé ou sous forme de comprimé,
un allongement à la rupture par traction-a à 120 °C est de 0,1 % ou supérieur et 1,7 % ou inférieur,
dans laquelle un module élastique du produit durci à 120 °C est de 0,8 x $10^4$ MPa ou supérieur,
dans laquelle un module élastique du produit durci à 25 °C est de 1,4 $\times$ $10^4$ MPa ou supérieur,
dans laquelle l'allongement à la rupture par traction-a est calculé par l'Équation suivante, dans laquelle $X_0$ mm représente la longueur entière de l'éprouvette avant un essai de traction et $X_1$ mm représente la longueur entière de l'éprouvette après l'essai de traction, dans laquelle l'allongement à la rupture par traction-a est obtenu en soumettant une éprouvette à un essai de traction conformément à JIS K7162 dans des conditions d'une température de 120 °C, d'une charge d'essai de 20 MPa et 100 heures en utilisant une machine d'essai de fluage et un extensomètre pour la mesure de l'allongement à la rupture par traction :

$$\text{Équation : Allongement à la rupture par traction-a} = \{(X_1 \text{ mm} - X_0 \text{ mm})/X_0 \text{ mm}\} \times 100,$$

, et
l'éprouvette est un produit durci produit en soumettant la composition de résine pour fixation de rotor à un durcissement par chauffage à 175 °C pendant 4 heures, et la moulant en une forme d'haltère conformément à JIS K7162.

**2.** Composition de résine pour fixation de rotor selon la revendication 1, dans laquelle

un allongement à la rupture par traction-b est de 0,1 % ou supérieur et 0,5 % ou inférieur, et
l'allongement à la rupture par traction-b est obtenu en soumettant une éprouvette à un essai de traction dans des conditions d'une température de 25 °C, d'une charge d'essai de 20 MPA et 100 heures.

**3.** Composition de résine pour fixation de rotor selon la revendication 1 ou 2, dans laquelle la quantité de la résine thermodurcissable est supérieure ou égale à 5 % en masse et inférieure ou égale à 40 % en masse basée sur 100 % en masse de la quantité totale de la composition de résine pour fixation de rotor, et
la quantité de la résine époxy est supérieure ou égale à 70 % en masse et inférieure ou égale à 100 % en masse basée sur 100 % en masse de la résine thermodurcissable.

**4.** Composition de résine pour fixation de rotor selon l'une quelconque des revendications 1 à 3, dans laquelle le rapport équivalent (EP)/(OH) du nombre de groupes époxy (EP) dans la résine thermodurcissable totale sur le nombre de groupes hydroxyle phénoliques (OH) dans la résine phénolique entière est supérieur ou égal à 1,0 et inférieur ou égal à 1,2.

**5.** Rotor (100) comprenant :

un noyau de rotor (110) fixé et installé sur un arbre rotatif (170) dans lequel une pluralité de portions d'orifice (150) sont prévues le long de la portion périphérique de l'arbre rotatif (170) ;
un aimant (120) inséré dans les portions d'orifice (150) ; et
un élément de fixation (130) prévu dans une portion de séparation (140) entre la portion d'orifice (150) et l'aimant (120), dans lequel
l'élément de fixation (130) est formé en utilisant la composition de résine pour fixation de rotor selon l'une quelconque des revendications 1 à 4.

6. Rotor (100) selon la revendication 5, dans lequel une largeur de la portion de séparation (140) entre la portion d'orifice (150) et l'aimant (120) est de 20 μm ou supérieure et 500 μm ou inférieure.

7. Automobile qui est fabriquée en utilisant le rotor (100) selon la revendication 5 ou 6.

FIG. 1

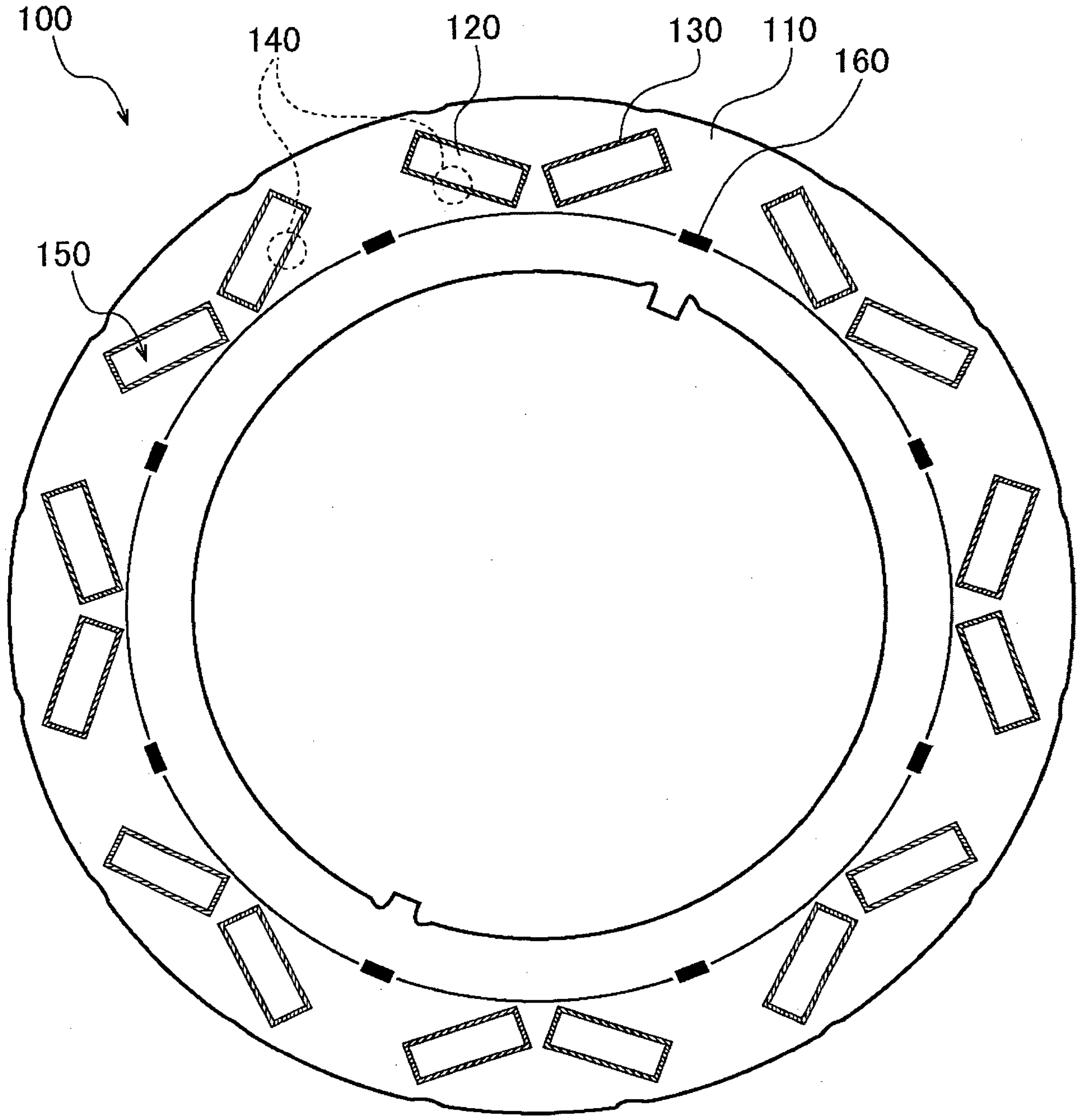

FIG. 2

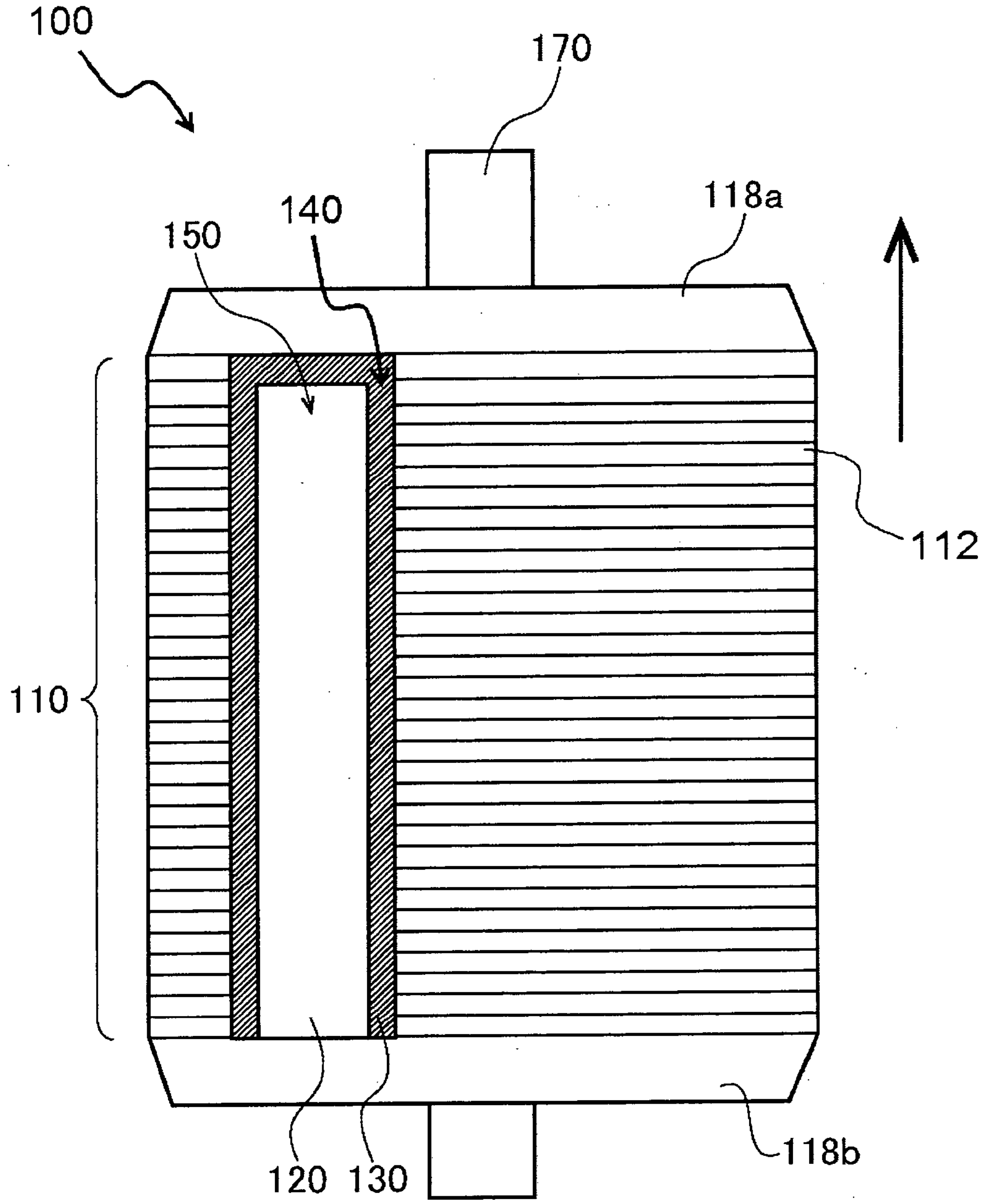

FIG. 3

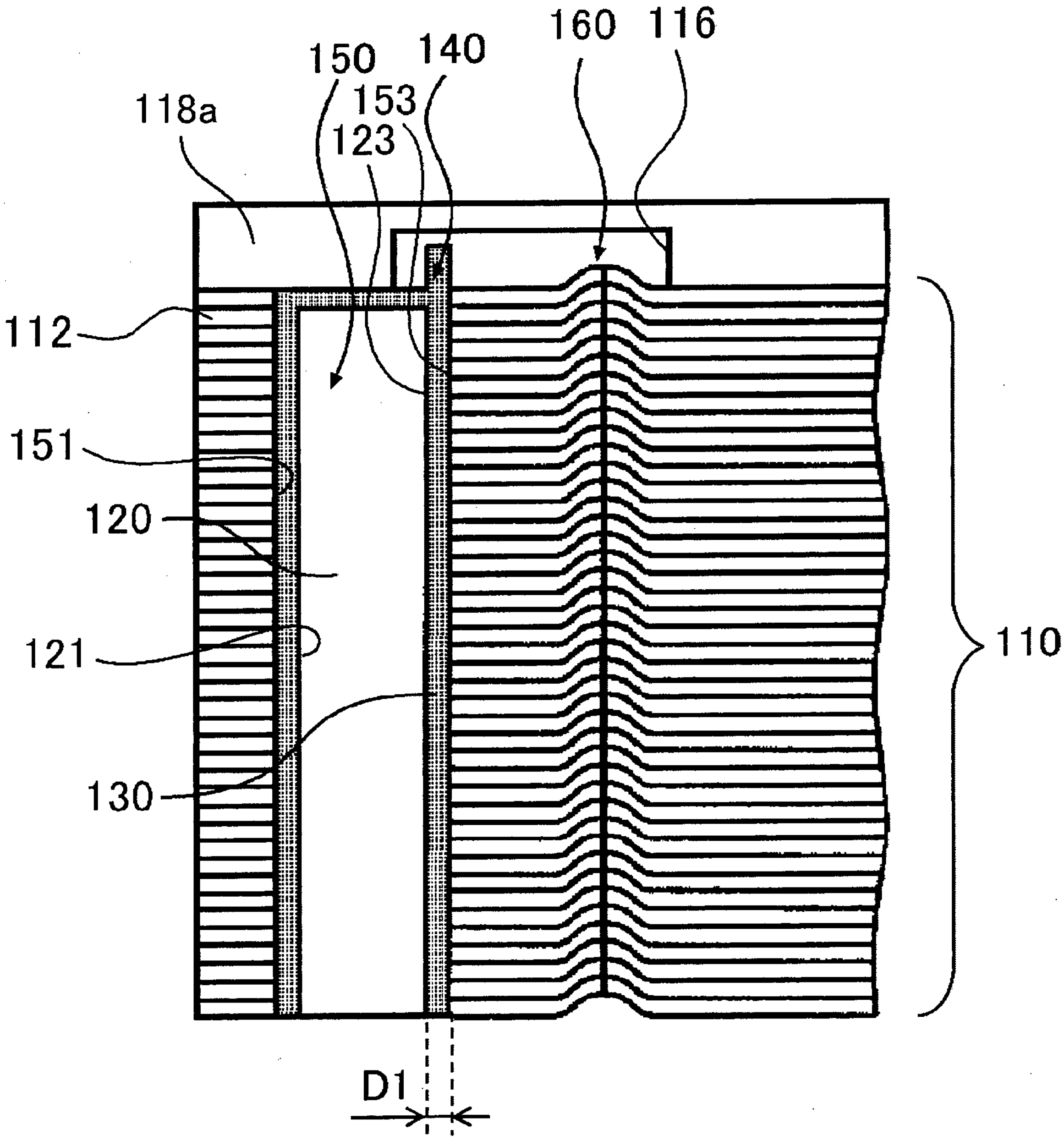

FIG. 4

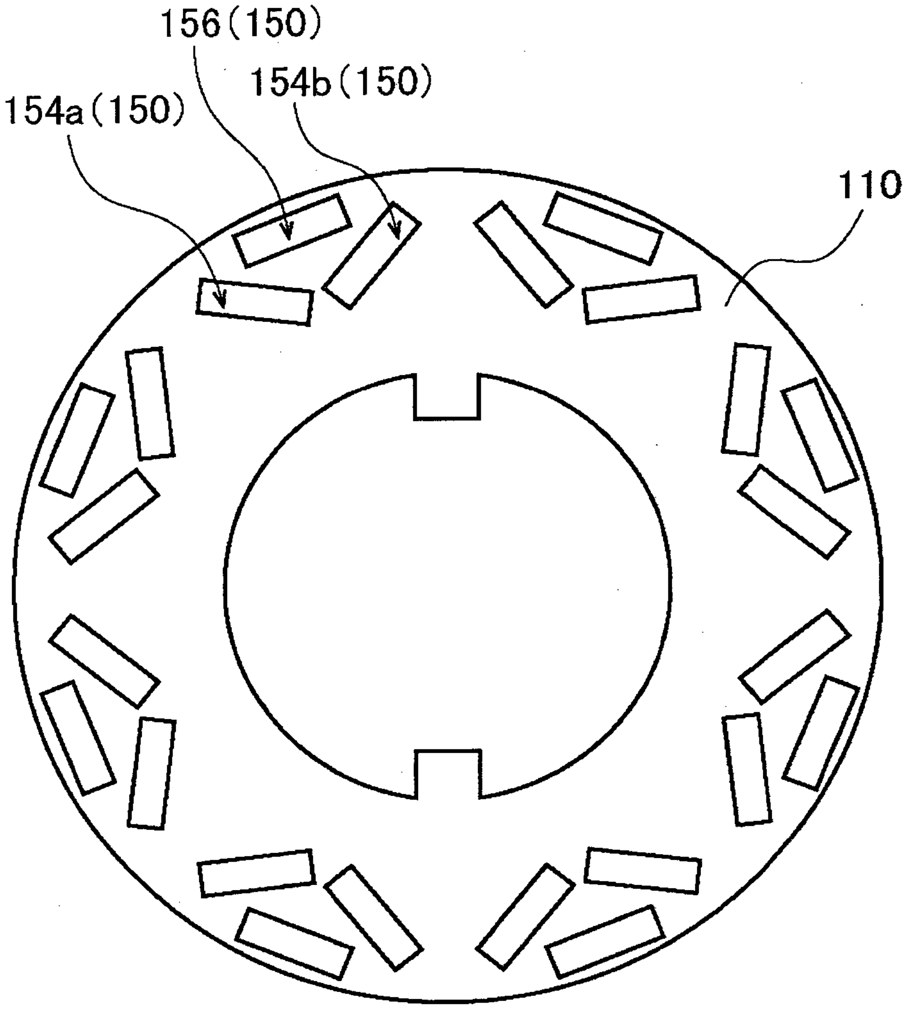

FIG. 5

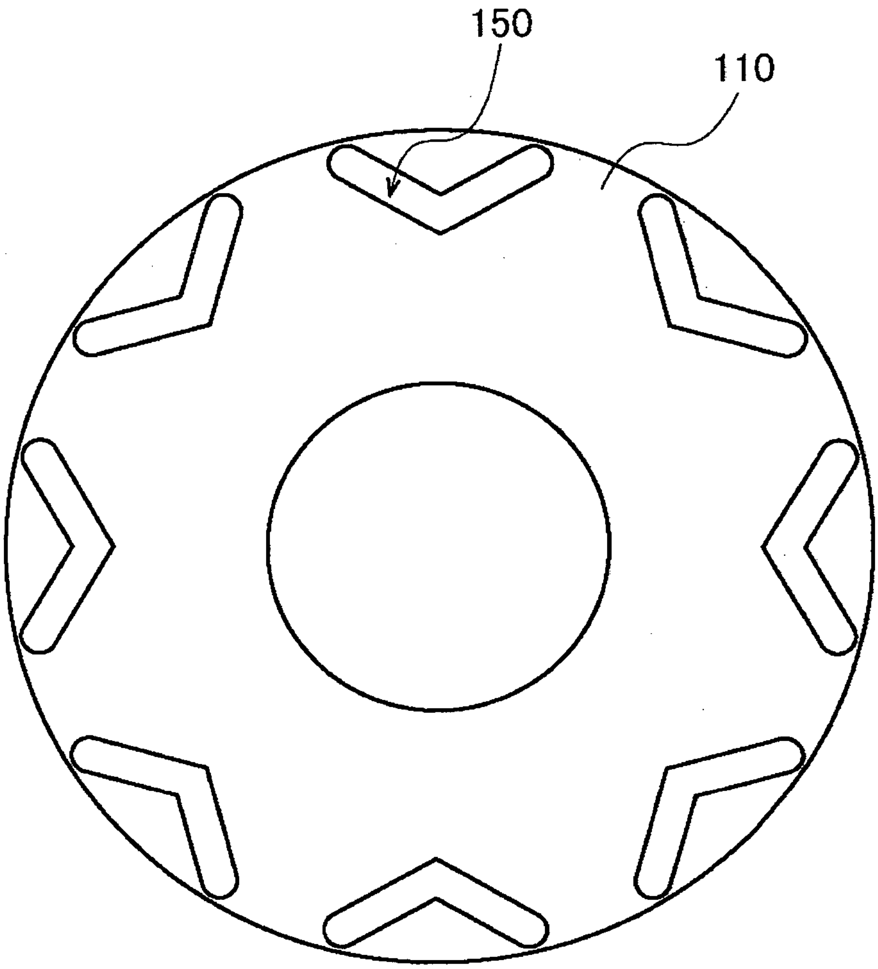

FIG. 6

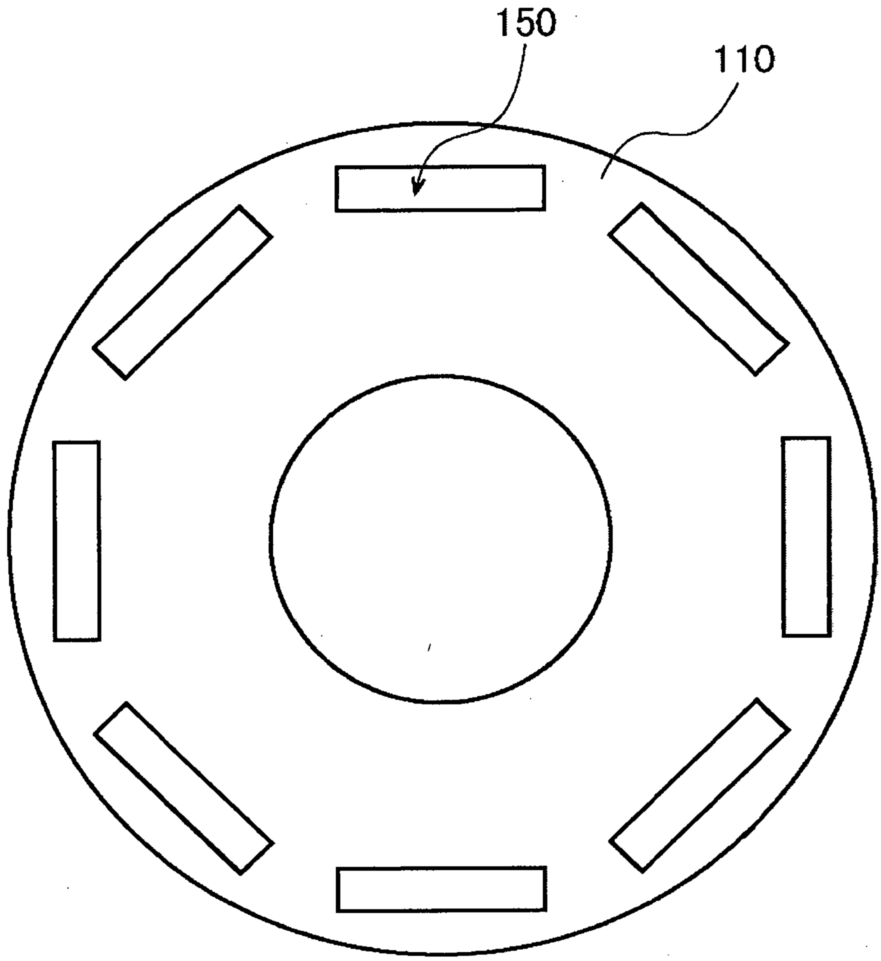

FIG. 7

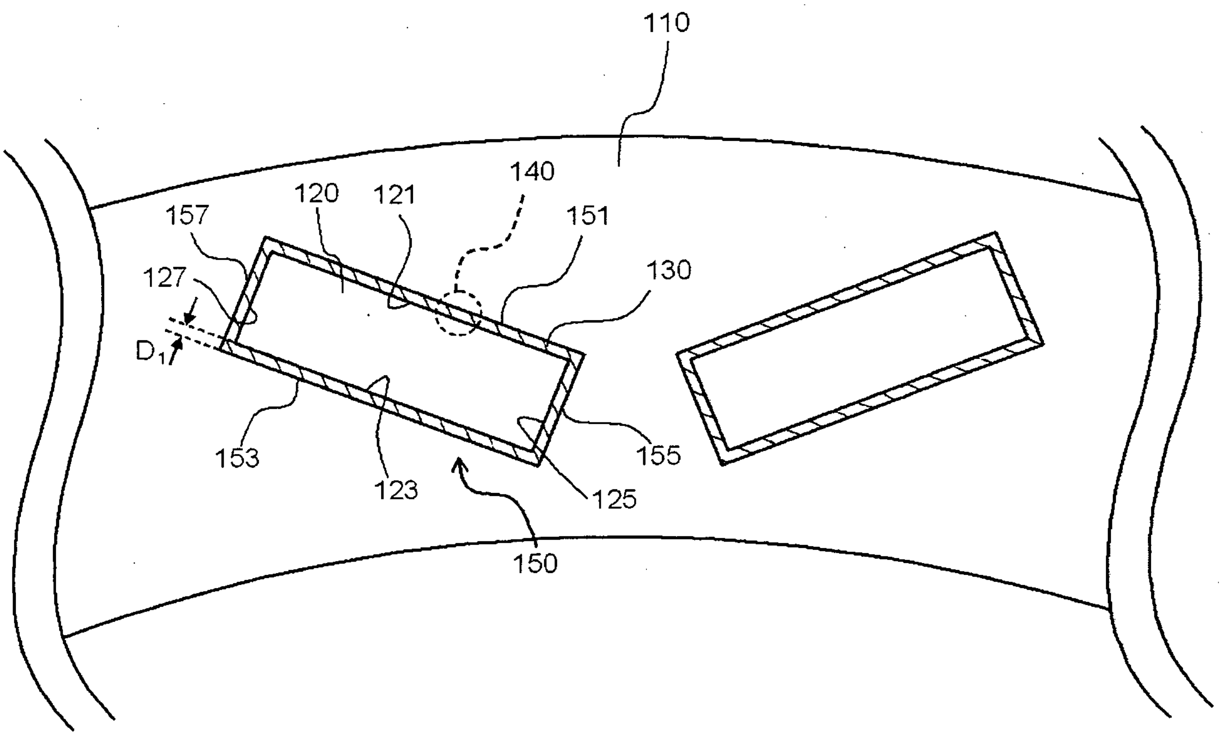

FIG. 8

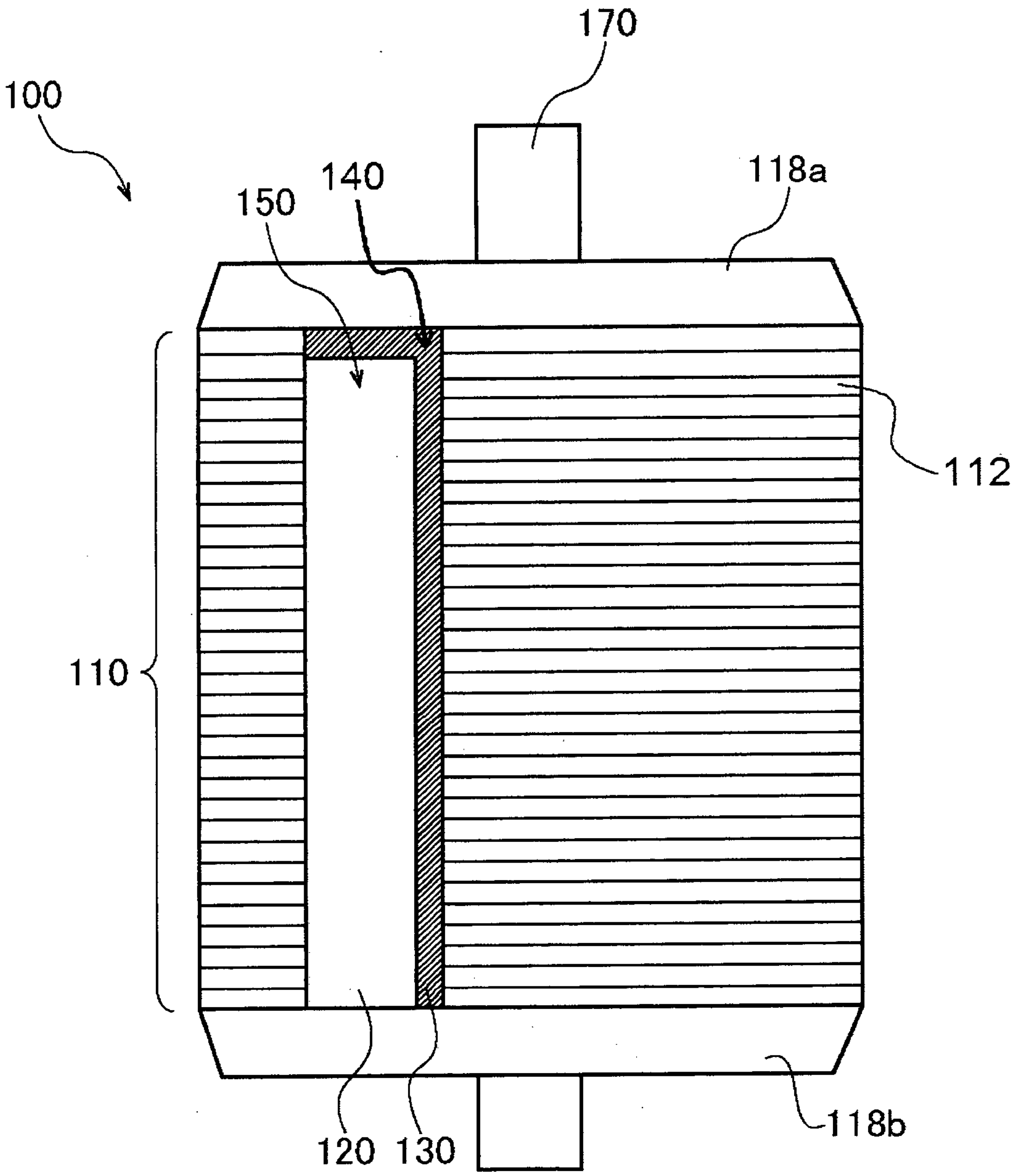

FIG. 9

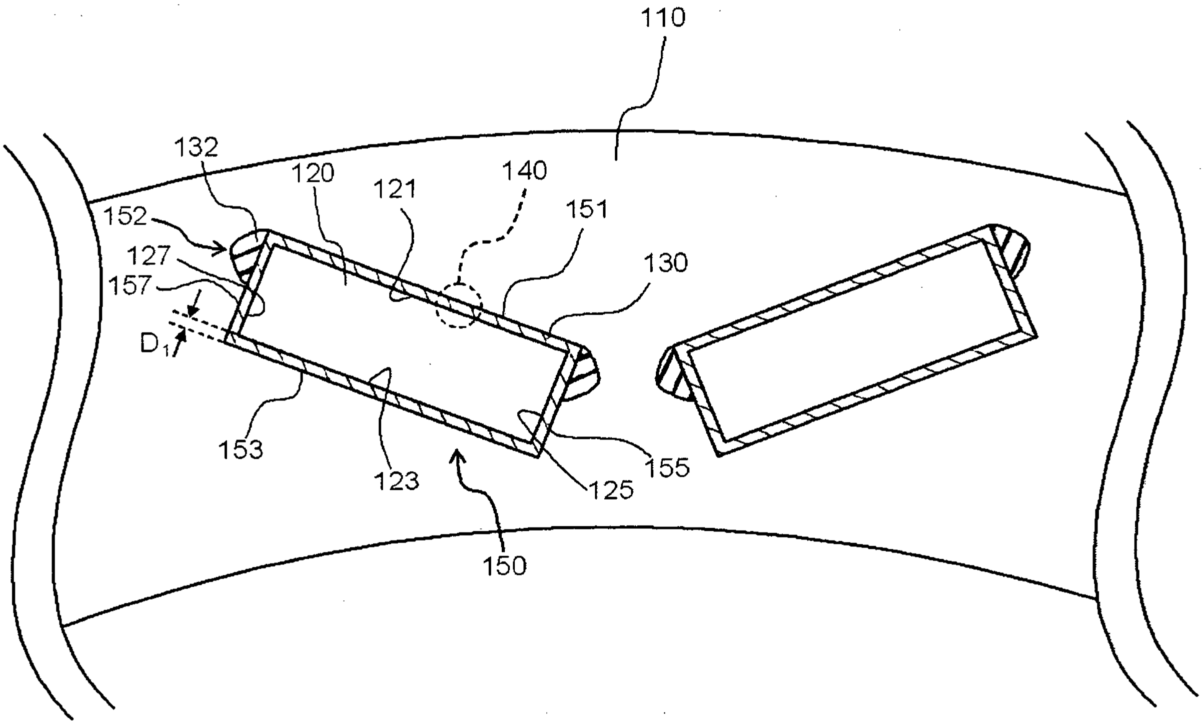

FIG. 10

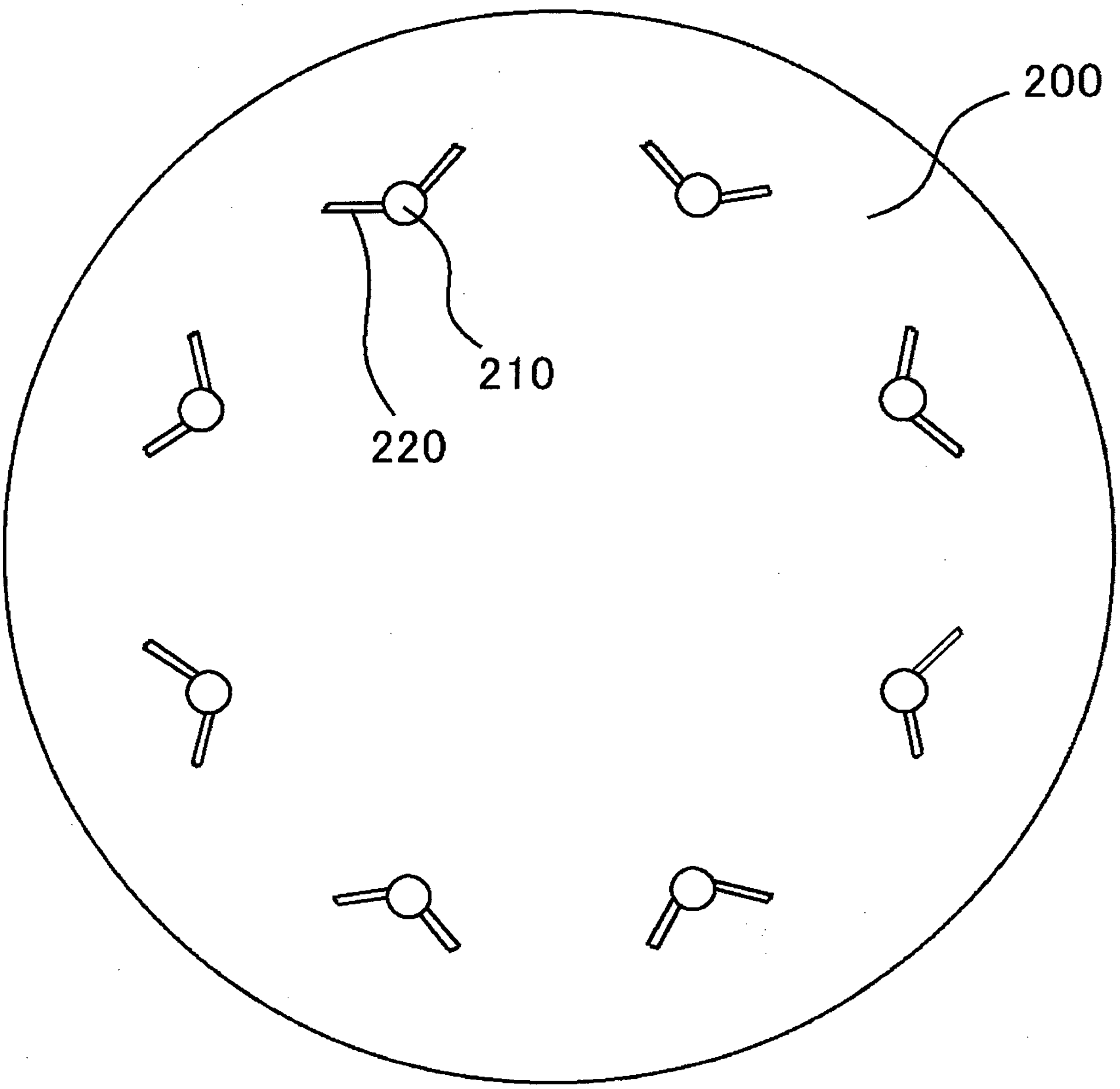

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2012045885 A
- JP 2009013213 A
- JP 2002359942 A
- JP 2003199303 A
- JP 2005304247 A
- JP 11098735 A
- JP 2007236020 A
- JP 2010159400 A
- US 2011241188 A1
- WO 2008007679 A1
- EP 0350232 A2
- WO 2010031445 A1
- WO 2010127907 A1
- JP 2003137528 A